(19) Europäisches Patentamt
European Patent Office
Office européen des brevets

(11) **EP 4 679 327 A1**

(12) **EUROPEAN PATENT APPLICATION**
published in accordance with Art. 153(4) EPC

(43) Date of publication:
**14.01.2026 Bulletin 2026/03**

(51) International Patent Classification (IPC):
***G06N 3/08*** (2023.01)

(21) Application number: **24777562.0**

(22) Date of filing: **20.02.2024**

(86) International application number:
**PCT/CN2024/077717**

(87) International publication number:
**WO 2024/198769 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.03.2023 CN 202310335408**
**19.07.2023 CN 202310891669**

(71) Applicant: **HUAWEI TECHNOLOGIES CO., LTD.**
**Shenzhen 518129 (CN)**

(72) Inventors:
• **RAO, Zhongwen**
**Shenzhen, Guangdong 518129 (CN)**
• **PAN, Lujia**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **MODEL TRAINING METHOD, POWER PREDICTION METHOD, AND DEVICE**

(57) This application discloses a model training method, a power prediction method, and a device, which may be applied to the field of artificial intelligence. A model includes at least a first model and a second model. The method includes: obtaining a dataset including historical power data and historical meteorological data in preset duration; determining a weight of a loss function of each model based on the dataset; constructing a target loss function, where the first model and the second model may be used to represent input data, and data represented by the first model is not completely the same as data represented by the second model; and finally training the models based on the target loss function. More complete information is obtained from different modal data (that is, the historical power data and the historical meteorological data) and different time scales (that is, the preset duration) based on a currently available data source, to optimize the learning model and achieve higher prediction precision.

```
┌─────────────────────────────────────────────┐
│            Obtain a dataset                  │──── 501
└─────────────────────────────────────────────┘
                      │
                      ▼
┌─────────────────────────────────────────────┐
│ Determine, based on the dataset, a first     │──── 502
│ weight of a first sub-loss function          │
│ corresponding to a first model and a second  │
│ weight of a second sub-loss function         │
│ corresponding to a second model              │
└─────────────────────────────────────────────┘
                      │
                      ▼
┌─────────────────────────────────────────────┐
│ Determine a final target loss function based │──── 503
│ on the first sub-loss function,              │
│ the second sub-loss function, the first      │
│ weight, and the second weight                │
└─────────────────────────────────────────────┘
                      │
                      ▼
┌─────────────────────────────────────────────┐
│ Train the models based on training data and  │──── 504
│ validation data in the dataset               │
│ and the target loss function, to obtain a    │
│ trained high-precision prediction            │
│ model                                        │
└─────────────────────────────────────────────┘
```

FIG. 4

EP 4 679 327 A1

**Description**

This application claims priorities to Chinese Patent Application No. 202310335408.3, filed with the China National Intellectual Property Administration on March 24, 2023 and entitled "MODEL TRAINING METHOD, PHOTOVOLTAIC POWER GENERATION POWER PREDICTION METHOD, AND DEVICE", and to Chinese Patent Application No. 202310891669.3, filed with the China National Intellectual Property Administration on July 19, 2023 and entitled "MODEL TRAINING METHOD, POWER PREDICTION METHOD, AND DEVICE", both of which are incorporated herein by reference in their entireties.

**TECHNICAL FIELD**

This application relates to the field of machine learning, and in particular, to a model training method, a power prediction method, and a device.

**BACKGROUND**

Solar energy is clean, safe, and renewable energy, but cannot be continuously produced. The solar energy has a high volatility, which poses a major challenge for integrating photovoltaic power generation into a power grid system. In addition, it is also an important issue to predict load power in different scenarios and schedule a power grid to support power trading. Therefore, it is important to predict power (photovoltaic power generation power or load consumption power). The power prediction is to accurately estimate power supply or usage of a power plant at different time granularities and time scales.

Current power prediction solutions mainly include two manners: 1. Based on historical data, this problem is processed as a time series prediction problem. In this method, random sampling is performed in frequency domain, to reduce calculation complexity from a perspective of reducing an input vector length. 2. Domain knowledge is added from different perspectives to restrict or improve a model learning process. That is, the domain knowledge is added to a model as prior knowledge to restrict and optimize the model.

The sampling in the foregoing manner 1 inevitably causes a loss to input information. Although balance may be made between operation performance and final model precision based on a sampling rate, the balance essentially requires manual intervention to optimize a hyperparameter. In addition, the method model is complex, and a large amount of data is required to perform drive learning as a basis for implementing corresponding precision. The addition of the domain knowledge in the foregoing manner 2 needs to be used as a loss constraint to participate in model training. Consequently, accuracy of the manner 2 is affected by precision of upper and lower bound fitting functions, and no sufficient ablation study is performed to prove validity of the constraint in the design of the manner 2.

**SUMMARY**

Embodiments of this application provide a model training method, a power prediction method, and a device, to explore how to perform complete information learning from a multi-data source and multi-time scale perspective, so as to obtain a model with high precision. Specifically, more complete information is obtained from different modal data (that is, data types such as historical power data, historical real meteorological data, and historical predicted meteorological data) and different time scales (that is, preset duration, for example, past 24 hours, which may be customized, where different customized lengths indicate different time scales) based on a currently available data source, to optimize a learning model and achieve higher prediction precision.

In view of this, embodiments of this application provide the following technical solutions.

According to a first aspect, an embodiment of this application first provides a model training method, which may be applied to the field of artificial intelligence. The method includes: obtaining a dataset. The dataset may include training data and validation data, and a data type of the dataset includes at least historical power data (for example, power data obtained through sampling in past 24 hours) in preset duration t (for example, the past 24 hours) and historical meteorological data (for example, meteorological data obtained through sampling in the past 24 hours). Then, a first weight of a first sub-loss function corresponding to a first model and a second weight of a second sub-loss function corresponding to a second model are further determined based on the dataset. The first model and the second model may be used to represent input data, and data represented by the first model is not completely the same as data represented by the second model. After the first weight and the second weight are obtained, a final target loss function may be determined based on the first sub-loss function, the second sub-loss function, the first weight, and the second weight. Finally, the models are trained based on the training data and the validation data in the dataset, and the target loss function, to obtain a trained high-precision prediction model. The trained model includes at least a trained first model and a trained second model, and the trained model may be deployed online, to complete a prediction task of real-time power data (like power generation power or load power).

In the foregoing implementations of this application, more complete information is obtained from different modal data (that is, data types such as the historical power data, historical real meteorological data, and historical predicted meteorological data) and different time scales (that is, the preset duration, for example, the past 24 hours, which may be customized, where different customized lengths indicate different time scales) based on a currently available data source, to optimize the learning model and achieve higher prediction precision.

In a possible implementation of the first aspect, the first model and the second model may represent the data in different dimensions. For example, the first model and the second model may represent different types of data, or respectively represent time domain data and frequency domain data. Optionally, the first model is used to perform global representation on at least the historical power data and the historical meteorological data in the dataset, and the second model is used to perform local representation on the historical meteorological data in the dataset.

In a possible implementation of the first aspect, the historical meteorological data may include the historical real meteorological data (for example, the meteorological data obtained through sampling in the past 24 hours) and the historical predicted meteorological data (for example, real-time predicted meteorological data that is predicted in the past 24 hours and that is collected in correspondence with a real meteorological data sampling moment) corresponding to the historical real meteorological data. Therefore, when the historical meteorological data is collected, the real meteorological data and the predicted meteorological data may be collected at the same time, to obtain the high-precision model through training.

Optionally, the historical meteorological data may include historical real meteorological data in a first time period, corresponding historical predicted meteorological data, and historical predicted meteorological data in a second time period. The historical real meteorological data in the first time period and the corresponding historical predicted meteorological data may be used to determine the first weight and the second weight, and the historical predicted meteorological data in the second time period is used for training, for example, used as input of the first model or the second model in a training process.

In a possible implementation of the first aspect, the historical power data includes power generation power or load power, the power generation power includes power generated by a power generation device through power generation, for example, photovoltaic power generation power of a photovoltaic power generation device, and the load power is power of electric energy consumed by one or more devices. Correspondingly, when the historical power data includes the power generation power, the prediction model obtained through training may be used to predict the power generation power; and when the historical power data includes the load power, the prediction model obtained through training may be used to predict load power of a power-consuming device. Therefore, according to the method provided in this application, the training data may be selected based on an actual requirement, to implement meteorology-based power generation power prediction or load power prediction.

In a possible implementation of the first aspect, the historical real meteorological data in the first time period and the corresponding historical predicted meteorological data in the dataset may include at least a first sub-dataset and a second sub-dataset. For example, the historical real meteorological data in the first time period and the corresponding historical predicted meteorological data in the dataset may be divided into the first sub-dataset and the second sub-dataset based on a specified proportion. The first sub-dataset may also be referred to as a training dataset, and the second sub-dataset may also be referred to as a validation dataset. Historical real meteorological data and historical predicted meteorological data included in the first sub-dataset may be respectively referred to as first historical real meteorological data and first historical predicted meteorological data. Historical real meteorological data and historical predicted meteorological data included in the second sub-dataset may be referred to as second historical real meteorological data and second historical predicted meteorological data. In this case, an implementation of determining the first weight of the first sub-loss function and the second weight of the second sub-loss function based on the dataset may be as follows: First accuracy of the first historical predicted meteorological data in the first sub-dataset is determined based on data in the first sub-dataset, and second accuracy of the second historical predicted meteorological data in the second sub-dataset is determined based on data in the second sub-dataset. Then, the first weight of the first sub-loss function is determined based on the first accuracy and the second accuracy that are obtained through calculation. After the first weight is obtained, the second weight of the second sub-loss function may be further determined based on the first weight.

In the foregoing implementation of this application, the prediction accuracy of the historical predicted meteorological data of the two sub-datasets is separately calculated, the weights of the model loss functions are determined based on the accuracy, and different weights are assigned to different models, to comprehensively obtain complete and effective information in a model training process, thereby improving model training efficiency and training precision.

In a possible implementation of the first aspect, a value of the first weight is inversely correlated with a value of the second accuracy.

In the foregoing implementation of this application, a function of the limitation that the value of the first weight is inversely correlated with the value of the second accuracy is as follows: When prediction precision of the historical predicted meteorological data in the validation data is low (that is, the second accuracy is low), a lower weight is assigned to the second model (that is, a value of the second weight is small), and a higher weight is assigned to the first model (that is, a value of the first weight is large), to moderate impact caused by insufficient precision of the historical predicted meteorological data of the validation set based on global information. This focuses on extraction of the global information. On the contrary, when the prediction precision of the historical predicted meteorological data in the validation data is high (that is, the second accuracy is high), a higher weight is assigned to the second model (that is, the value of the second weight is large), to obtain more important information based on the model.

In a possible implementation of the first aspect, for calculation of the first accuracy, data slicing may be performed on data of a current training set (that is, the first sub-dataset) by using a time window size of the preset duration t (for example, 24 hours), to obtain M first slice segments $Q_i$ ($1 \leq i \leq M$). Then, first target accuracy $ACC_{li}$ of first historical predicted meteorological data $NWP_{1i}$ in each first slice segment $Q_i$ is calculated based on first historical real meteorological data $NWD_{1i}$ and the first historical predicted meteorological data $NWP_{1i}$ in each first slice segment $Q_i$. Based on this, M pieces of first target accuracy (that is, $ACC_{11}$, $ACC_{12}$, ..., and $ACC_{1M}$) may be obtained in total. Finally, the first accuracy is determined based on the M pieces of first target accuracy. The first accuracy includes a maximum value $ACC_{max}$, a minimum value $ACC_{min}$, and/or a mean value $ACC_{mean}$ of the M pieces of first target accuracy.

In the foregoing implementation of this application, that the first accuracy is determined based on the target accuracy of the data slice segments of the first sub-dataset is specifically described, and the first accuracy is finally calculated based on statistical features of the M pieces of first target accuracy. Therefore, precision is high, and implementation is feasible.

In a possible implementation of the first aspect, for calculation of the second accuracy, a manner of determining the second accuracy of the second historical predicted meteorological data based on the data in the second sub-dataset is similar to the foregoing manner of determining the first accuracy. Specifically, data slicing is performed on the data in the second sub-dataset to obtain N second slice segments $P_j$ ($1 \leq j \leq N$). Then, second target accuracy $ACC_{2j}$ of second historical predicted meteorological data $NWP_{2j}$ in each second slice segment $P_j$ is calculated based on second historical real meteorological data $NWD_{2j}$ and the second historical predicted meteorological data $NWP_{2j}$ in each second slice segment $P_j$. Based on this, N pieces of second target accuracy (that is, $ACC_{21}$, $ACC_{22}$, ..., and $ACC_{2N}$) may be obtained in total. Finally, the second accuracy is determined based on the N pieces of second target accuracy. The second accuracy includes a mean value of the N pieces of second target accuracy.

In the foregoing implementation of this application, that the second accuracy is determined based on the target accuracy of the data slice segments of the second sub-dataset is specifically described, and the second accuracy is finally calculated based on statistical features of the N pieces of second target accuracy. Therefore, precision is high, and implementation is feasible.

In a possible implementation of the first aspect, the first model may be divided into different submodels based on different data modalities. For example, the first model may include at least one of a first submodel and a second submodel. Input of the first submodel is historical power data in the first time period of the dataset, and is used to perform global representation on the historical power data. Input of the second submodel is the historical predicted meteorological data in the dataset, and is used to perform global representation on historical predicted meteorological data in the first time period.

In the foregoing implementation of this application, the first model may include a plurality of submodels, is used to perform global representation on different types of historical data, and has decoupling.

In a possible implementation of the first aspect, the model may further include a third model, and input of the third model is data in the dataset. The input data may be some or all data in the dataset. This is not specifically limited in this application. Output of the third model is a first adaptive weight of the first model and a second adaptive weight of the second model, and the third model is used to combine an output result of the first model and an output result of the second model based on the first adaptive weight and the second adaptive weight, to obtain a final prediction result.

In the foregoing implementation of this application, the model may further include a third model, and the output of the third model is the adaptive weights of the other two models (that is, different weights of the corresponding output results are assigned to the other two models), to combine the output results of the first model and the second model, to obtain the final prediction result. The third model can make the prediction result more accurate.

In a possible implementation of the first aspect, if the model further includes the third model, the constructed target loss function further needs to include a loss function corresponding to the third model. In this case, the final target loss function is determined based on the first sub-loss function, the second sub-loss function, the first weight, the second weight, and a third sub-loss function that corresponds to the third model.

In the foregoing implementation of this application, since the additional third model is added, correspondingly, there is also the loss function (that is, the third sub-loss function) corresponding to the third model in the target loss function, and the complete and effective information may be adaptively and comprehensively obtained during training, so that the model is effective in the training process.

In a possible implementation of the first aspect, the first submodel, the second submodel, and the second model include any one of the following: a temporal convolutional network (temporal convolutional network, TCN), a recurrent neural network (recurrent neural network, RNN), a long short-term memory (long short-term memory, LSTM) network, a multilayer perceptron (multilayer perceptron, MLP), and the like. This is not specifically limited in this application.

In the foregoing implementation of this application, for a network structure that does not depend on or specify a model, the first submodel, the second submodel, and the second model may have a plurality of choices, and have wide applicability.

In a possible implementation of the first aspect, the third model may be the MLP, or may be another type of neural network with a self-attention mechanism. This is not specifically limited in this application.

In the foregoing implementation of this application, for a network structure that does not depend on or specify a model, the third model may have a plurality of choices, and has wide applicability.

A second aspect of an embodiment of this application further provides a power prediction method, which may be applied to the field of artificial intelligence. The method includes: obtaining input data, where the input data includes historical power data in first preset duration (for example, 24 hours before a current moment) and predicted meteorological data in second preset duration (for example, 24 hours after the current moment); and after the input data is obtained, inputting the input data to models (for example, a trained first model and a trained second model) trained in a training phase, to obtain predicted power data at at least one preset moment (for example, if the second preset duration is 24 hours, and a prediction time granularity is 1 hour, preset moments include a total of 24 moments in the future 24 hours) in the future to-be-predicted second preset duration. The trained first model and the trained second model are used to represent the input data, data represented by the model is not completely the same as data represented by the second model, and representation output by the trained first model and representation output by the trained second model are used to obtain the predicted power data at the at least one preset moment in the second preset duration.

In the foregoing implementation of this application, real-time predicted meteorological data and the historical power data are used as input, and the high-precision model obtained through training in the foregoing training process are used to complete an inference process, and an inference result is fed back, so that prediction precision of the inference result is high.

In a possible implementation of the second aspect, the trained first model may be used to perform global representation on the historical power data in the first preset duration or the predicted meteorological data in the second preset duration, the trained second model may be used to perform local representation on the predicted meteorological data in the second preset duration, and the global representation and the local representation may be used to obtain the predicted power data at the at least one preset moment in the second preset duration.

In a possible implementation of the second aspect, the trained model may be obtained through training based on a dataset and a target loss function, and the dataset may include historical power data in third preset duration, historical real meteorological data, and historical predicted meteorological data corresponding to the historical real meteorological data. The target loss function is determined based on a first sub-loss function, a second sub-loss function, a first weight of the first sub-loss function, and a second weight of the second sub-loss function. The first sub-loss function is a loss function corresponding to the first model, the second sub-loss function is a loss function corresponding to the second model, and the first weight and the second weight are determined based on the dataset.

In a possible implementation of the second aspect, the first model may be divided into different submodels based on different data modalities. For example, the first model may include at least a first submodel and a second submodel. Input of the first submodel is the historical power data in the dataset, and is used to perform global representation on the historical power data. Input of the second submodel is the historical predicted meteorological data in the dataset, and is used to perform global representation on the historical predicted meteorological data.

In the foregoing implementation of this application, the first model may include a plurality of submodels, is used to perform global representation on different types of historical data, and has decoupling.

In a possible implementation of the second aspect, the predicted power data at the at least one preset moment in the second preset duration includes power generation power or load power at the at least one preset moment in the second preset duration, the power generation power includes power generated by a power generation device through power generation, and the load power is power of electric energy consumed by one or more devices. Therefore, according to the method provided in this application, meteorology-based power generation power prediction or load power prediction can be implemented.

In a possible implementation of the second aspect, the model may further include a third model, and input of the third model is the foregoing input data. Output of the third model is a first adaptive weight of the first model and a second adaptive weight of the second model, and the third model is used to combine an output result of the first model and an output result of the second model based on the first adaptive weight and the second adaptive weight, to obtain a final prediction result.

In the foregoing implementation of this application, the model may further include a third model, and the output of the third model is the adaptive weights of the other two models, to combine the output results of the first model and the second model, to obtain the final prediction result. The third model can make the prediction result more accurate.

In a possible implementation of the first aspect, the first submodel, the second submodel, and the second model include any one of the following: a TCN, an RNN, an LSTM network, an MLP, and the like. This is not specifically limited in this application.

In the foregoing implementation of this application, for a network structure that does not depend on or specify a model, the first submodel, the second submodel, and the second model may have a plurality of choices, and have wide applicability.

In a possible implementation of the first aspect, the third model may be the MLP, or may be another type of neural network with a self-attention mechanism. This is not specifically limited in this application.

In the foregoing implementation of this application, for a network structure that does not depend on or specify a model, the third model may have a plurality of choices, and has wide applicability.

According to a third aspect, an embodiment of this application provides a training device, and the training device has a function of implementing the method according to any one of the first aspect or the possible implementations of the first aspect. The function may be implemented by hardware, or may be implemented by hardware executing corresponding software. The hardware or the software includes one or more modules corresponding to the function.

According to a fourth aspect, an embodiment of this application provides an execution device, and the execution device has a function of implementing the method according to any one of the second aspect or the possible implementations of the second aspect. The function may be implemented by hardware, or may be implemented by hardware executing corresponding software. The hardware or the software includes one or more modules corresponding to the function.

A fifth aspect of embodiments of this application provides a training device. The training device may include a memory, a processor, and a bus system. The memory is configured to store a program. The processor is configured to invoke the program stored in the memory, to perform the method according to any one of the first aspect or the possible implementations of the first aspect of embodiments of this application.

According to a sixth aspect, an embodiment of this application provides an execution device. The execution device may include a memory, a processor, and a bus system. The memory is configured to store a program. The processor is configured to invoke the program stored in the memory to perform the method according to any one of the second aspect or the possible implementations of the second aspect of embodiments of this application.

According to a seventh aspect, an embodiment of this application provides a computer-readable storage medium. The computer-readable storage medium stores instructions. When the instructions are run on a computer, the computer is enabled to perform the method according to any one of the first aspect or the possible implementations of the first aspect, or perform the method according to any one of the second aspect or the possible implementations of the second aspect.

According to an eighth aspect, an embodiment of this application provides a computer program. When the computer program is run on a computer, the computer is enabled to perform the method according to any one of the first aspect or the possible implementations of the first aspect, or perform the method according to any one of the second aspect or the possible implementations of the second aspect.

According to a ninth aspect, an embodiment of this application provides a chip. The chip includes at least one processor and at least one interface circuit, where the interface circuit is coupled to the processor. The at least one interface circuit is configured to: perform sending and receiving functions, and send instructions to the at least one processor. The at least one processor is configured to run a computer program or the instructions. The at least one processor has a function of implementing the method according to any one of the first aspect or the possible implementations of the first aspect, or the at least one processor has a function of implementing the method according to any one of the second aspect or the possible implementations of the second aspect. The function may be implemented by hardware, may be implemented by software, or may be implemented by using a combination of hardware and software. The hardware or software includes one or more modules corresponding to the foregoing function. In addition, the interface circuit is configured to communicate with a module other than the chip.

**BRIEF DESCRIPTION OF DRAWINGS**

FIG. 1 is a diagram of a structure of an artificial intelligence main framework according to an embodiment of this application;
FIG. 2 is a diagram of an application scenario according to an embodiment of this application;
FIG. 3 is a diagram of a framework of a task processing system according to an embodiment of this application;
FIG. 4 is a schematic flowchart of a model training method according to an embodiment of this application;
FIG. 5 is another schematic flowchart of a model training method according to an embodiment of this application;
FIG. 6 is a diagram of an example according to an embodiment of this application;
FIG. 7 is a diagram of specific description of a power prediction problem according to an embodiment of this application;
FIG. 8 is a diagram of another example according to an embodiment of this application;

FIG. 9 is a schematic flowchart of a power prediction method according to an embodiment of this application;

FIG. 10 is a schematic flowchart of a power prediction method according to an embodiment of this application;

FIG. 11 is a diagram of an overall algorithm framework according to an embodiment of this application;

FIG. 12 is a comparison diagram of beneficial effect of a method according to an embodiment of this application;

FIG. 13 is a diagram of a training device according to an embodiment of this application;

FIG. 14 is a diagram of an execution device according to an embodiment of this application;

FIG. 15 is another diagram of a training device according to an embodiment of this application;

FIG. 16 is another diagram of an execution device according to an embodiment of this application; and

FIG. 17 is a diagram of a structure of a chip according to an embodiment of this application.

## DESCRIPTION OF EMBODIMENTS

Embodiments of this application provide a model training method, a power prediction method, and a device, to explore how to perform complete information learning from a multi-data source and multi-time scale perspective, to obtain a model with high precision. Specifically, more complete information is obtained from different modal data (that is, data types such as historical power data, historical real meteorological data, and historical predicted meteorological data) and different time scales based on a currently available data source, to optimize a learning model and achieve higher prediction precision.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover a non-exclusive inclusion, so that a process, method, system, product, or device that includes a series of units is not necessarily limited to those units, but may include other units not expressly listed or inherent to such a process, method, system, product, or device.

To better understand solutions in embodiments of this application, the following first describes related terms and concepts that may be used in embodiments of this application. It should be understood that explanations of related concepts may be limited due to specific situations of embodiments of this application, but it does not mean that this application can only be limited to the specific situations. There may be differences in the specific situations of different embodiments. Details are not limited herein.

(1) Neural network

A neural network may include neural cells, and may be specifically understood as a neural network having an input layer, a hidden layer, and an output layer. Usually, the first layer is the input layer, the last layer is the output layer, and intermediate layers are all hidden layers. A neural network including a plurality of hidden layers is referred to as a deep neural network (deep neural network, DNN). Work of each layer in the neural network may be described by using a mathematical expression $\vec{y} = a(W \cdot \vec{x} + b)$. From a physical perspective, the work of each layer in the neural network may be understood as completing transformation from input space to output space (that is, from row space to column space of a matrix) by performing five operations on the input space (a set of input vectors). The five operations include: 1. dimension increasing/dimension reduction; 2. scaling up/scaling down; 3. rotation; 4. translation; and 5. "bending". The operations 1, 2, and 3 are completed by "$W \cdot \vec{x}$", the operation 4 is completed by "+b", and the operation 5 is implemented by "$a()$". The word "space" is used herein for expression because a classified object is not a single thing, but a type of things. Space is a collection of all individuals of such type of things. $W$ is a weight matrix, and each value in the matrix indicates a weight value of one neuron in the neural network at this layer. The matrix W determines space transformation from the input space to the output space described above. In other words, W at each layer of the neural network controls how to transform space. An objective of training a neural network is to finally obtain weight matrices of all layers of a trained neural network. Therefore, a training process of the neural network is essentially a manner of learning control of space transformation, and more specifically, learning a weight matrix. It should be noted that, in embodiments of this application, a neural network may also be referred to as a model.

(2) Loss function

During training of the neural network, because it is expected that output of the neural network is as close as possible to a value that is actually expected to be predicted, a current prediction value of the network may be compared with a target value that is actually expected, and then a matrix vector at each layer of the neural network is updated based on a difference between the current prediction value and the target value (certainly, there is usually an initialization process before the first update, that is, a parameter is preconfigured for each layer of the neural network). For example, if the prediction value of the network is large, the matrix vector is adjusted to lower the prediction value until the neural network can predict the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A larger output value (loss) of the loss function indicates a larger difference. Therefore, training of the neural network is a process of minimizing the loss as much as possible.

(3) Back propagation algorithm

During training of a neural network, an error back propagation (back propagation, BP) algorithm may be used to correct a value of a parameter in an initial neural network model, so that a reconstruction error loss of the neural network model becomes smaller. Specifically, an input signal is transferred forward until an error loss occurs at output, and the parameter in the initial neural network model is updated based on back propagation error loss information, to make the error loss converge. The back propagation algorithm is an error-loss-centered back propagation motion intended to obtain a parameter like a weight matrix, of an optimal neural network model.

(4) Numerical weather prediction (numerical weather prediction, NWP) data

The NWP data, also referred to as historical predicted meteorological data, refers to numerical prediction of future meteorological parameters through means such as physical modeling and statistics. The meteorological parameters include global horizontal irradiance (global horizontal irradiance, GHI), global tilt irradiance (global tilted irradiance, GTI), temperature (temperature, TEMP) at a height of horizontal 2 m, a wind speed (wind speed, WS) at a height of horizontal 10 m, and the like.

(5) Numerical weather data (numerical weather data, NWD)

The NWD may also be referred to as historical real meteorological data, and is real meteorological data that is actually recorded and sampled via a device like a sensor in a past period of time.

(6) Multi-modal modeling

Currently, there are two interpretations of multi-modalities. One interpretation is that information types are different, including: performing modeling on different types of information like text, time series, images, and audio. The other interpretation is that information types are same. For example, the information types are all time series, but objects are described from different angles. For example, one information type is information about a temperature sensor, and another information type is information about a wind speed sensor, which are numerical time series data, but may also be considered as multi-modal modeling processes.

(7) Multi-scale modeling

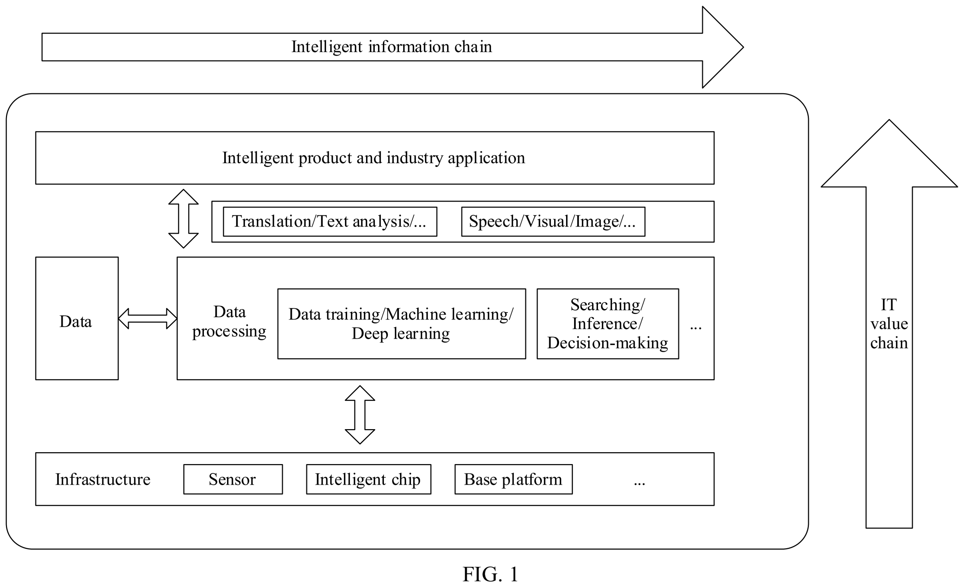

Currently, definition of multi-scale is described in a plurality of aspects. In embodiments of this application, the multi-scale is defined as: when processing time series data, capturing information of different time granularities; or when processing image data, processing information in different sizes of receptive fields.
The following describes embodiments of this application with reference to the accompanying drawings. A person of ordinary skill in the art may learn that, with development of technologies and emergence of a new scenario, the technical solutions provided in embodiments of this application are also applicable to a similar technical problem.
An overall working procedure of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision making, and intelligent execution and output. In this process, the data undergoes a refinement process of "datainformation-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a base platform. External communication is performed by using a sensor. A computing capability is provided by an intelligent chip (a hardware acceleration chip, for example, a CPU, an NPU, a GPU, an ASIC, or an FPGA). The base platform includes related platform assurance and support like a distributed computing framework and a network, and may include cloud storage and computing, an interconnection and interworking network, and the like. For example, the sensor communicates with the outside to obtain data, and the data is provided for an intelligent chip in a distributed computing system provided by the base platform for computing.

(2) Data

Data at an upper layer of the infrastructure indicates a data source in the field of artificial intelligence. The data relates to a graph, an image, a speech, and a text, further relates to internet of things data of a conventional device, and includes service data of an existing system and perception data like force, displacement, a liquid level, temperature, and humidity.

(3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed based on formal information and an inference control policy. A typical function is searching and matching.

Decision-making is a process of making a decision after intelligent information is inferred, and usually provides functions such as classification, ranking, and prediction.

(4) General capability

After data processing mentioned above is performed on the data, some general capabilities may further be formed based on a data processing result. For example, the general capabilities may be an algorithm or a general system, for example, translation, text analysis, computer vision processing, speech recognition, and image recognition.

(5) Intelligent product and industry application

Intelligent products and industry applications are products and applications of the artificial intelligence system in various fields, and are encapsulation for an overall solution of artificial intelligence, to productize intelligent information decision-making and implement applications. Application fields thereof mainly include an intelligent terminal, intelligent manufacturing, intelligent transportation, an intelligent home, intelligent healthcare, intelligent security protection, autonomous driving, a safe city, and the like.

Embodiments of this application may be applied to optimized designs of models (in embodiments of this application, at least two models are included, that is, a first model and a second model), and specifically, may be applied to optimized designs of loss functions of the models. The model whose loss function is optimized in this application may be specifically applied to subdivision fields in the field of artificial intelligence. Specifically, with reference to FIG. 1, data in the dataset obtained by infrastructure in this embodiment of this application may be a plurality of pieces of data of different types (that is, the dataset includes at least training data and validation data, where the training data may also be referred to as a training sample, a plurality of training samples form a training set, and a plurality of pieces of validation data form a validation set) obtained via devices such as a weather forecast platform and a weather server. The data in the dataset may be a plurality of pieces of image data, or may be a plurality of pieces of video data, or may be text data, audio data, or the like. For example, the dataset may include at least historical power data (like photovoltaic power generation power data or load power data) in preset duration, historical real meteorological data, and numerical time series data (that is, text data) like historical predicted meteorological data corresponding to the historical real meteorological data; or may include image data or video data that describes meteorological information, provided that the dataset meets functions of performing iterative training on the model and validating model precision. Specifically, a data type of the dataset is not limited in embodiments of this application.

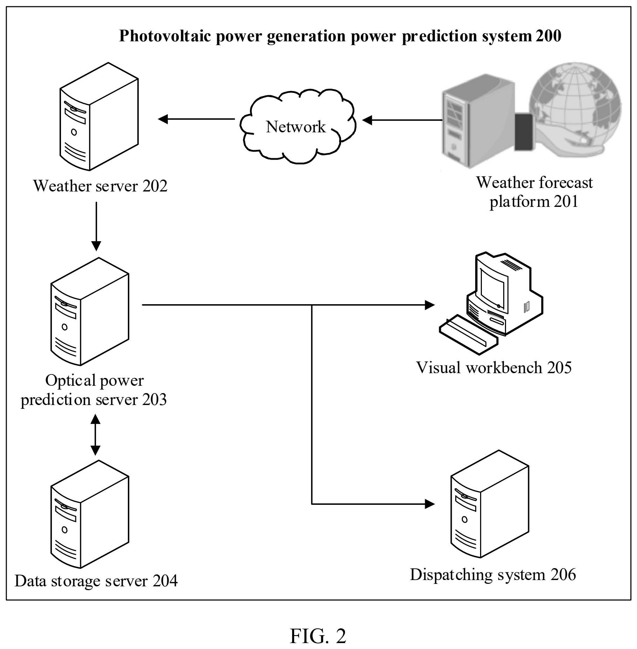

For example, a method provided in this application may be applied to a power generation power prediction scenario, or may be applied to a load power prediction scenario. The following uses photovoltaic power generation prediction as an example for description. Photovoltaic power generation power mentioned below may alternatively be replaced with load power. Details are not described below again. An embodiment of this application may be applied to a photovoltaic power generation power prediction system. A typical application scenario may be shown in FIG. 2. FIG. 2 is a system diagram of an architecture of a photovoltaic power generation power prediction system according to an embodiment of this application. For example, the photovoltaic power generation power prediction system 200 may include several parts such as a weather forecast platform 201, a weather server 202, an optical power prediction server 203, a data storage server 204, a visual workbench 205, and a dispatching system 206 shown in FIG. 2. Datasets such as numerical meteorological data and weather cloud map data may be obtained via the weather forecast platform 201, and the datasets are transmitted to the weather server 202 through a network. The weather server 202 and the data storage server 204 separately transmit data like real-time prediction/real meteorological data and historical photovoltaic power generation power data to the optical power prediction server 203. After a photovoltaic power generation power prediction value is obtained based on a model (including at least a first model and a second model) deployed on the optical power prediction server 203, the photovoltaic power generation power prediction value may be further transmitted to the visual workbench 205 and/or the dispatching system 206 in real time. The visual workbench 205 is used by a system operation and maintenance engineer to perform a corresponding operation. The dispatching system 206 may be connected to a state grid platform to support power grid dispatching and decision-making.

It should be noted that FIG. 2 is merely a diagram of a system architecture according to an embodiment of this application, and a location relationship between a device, a component, a module, and the like shown in the figure constitutes no limitation. In addition, an example in FIG. 2 is not used to limit a quantity and a type of each type of device.

It should be noted that a product form in embodiments of this application is mainly reflected as a core algorithm module of a photovoltaic power generation power prediction system, and there are two main sales forms of the product form. One is that during bidding for construction of a photovoltaic power plant, this function is added as a feature function in bidding documents to increase a bidding success rate. The other is that for a photovoltaic power plant that has been constructed, this function is directly used for bidding of the photovoltaic power generation power prediction system, where details of this function are described in bidding documents.

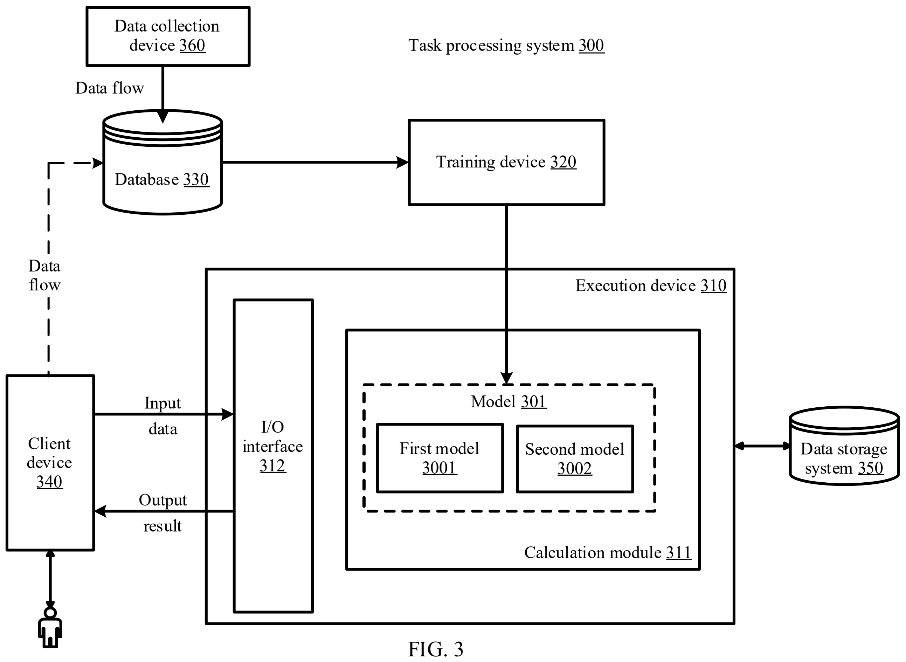

For ease of understanding of this solution, the following describes a framework of a task processing system provided in an embodiment of this application with reference to FIG. 3. FIG. 3 is a diagram of a system architecture of a task processing system according to an embodiment of this application. In FIG. 3, the task processing system 300 includes an execution device 310, a training device 320, a database 330, a client device 340, a data storage system 350, and a data collection device 360. The execution device 310 includes a calculation module 311 and an input/output (I/O) interface 312.

In a training phase, the data collection device 360 may be configured to: obtain opensource large-scale datasets (that is, a training set and a validation set) required by a user, and store the datasets into the database 330. Data in the datasets may be a plurality of different types of data obtained by devices such as the weather forecast platform 201 and the weather server 202 shown in FIG. 2. The datasets may include a plurality of pieces of training data (or referred to as training samples). The training data may be image data, may be video data, or may be audio data, text data, or the like; and is specifically related to a to-be-processed target task. This is not limited herein. For example, in embodiments of this application, the training data may be historical photovoltaic power generation power data (replaced with load power data in a load power prediction scenario) in preset duration, and historical real meteorological data, numerical time series data (that is, text data) like historical predicted meteorological data corresponding to the historical real meteorological data; or may be image data or video data that describes meteorological information. The training device 320 trains a model 301 (that is, includes at least a first model 3001 and a second model 3002) in this application based on the datasets maintained in the database 330. The model 301 obtained through training may be applied to different systems or devices (that is, the execution device 310), which may specifically be the optical power prediction server 203 shown in FIG. 2. In some special application scenarios, the execution device 310 may alternatively be an edge device or a terminal-side device, for example, a mobile phone, a tablet, a notebook computer, a monitoring system, or a security system. The execution device 310 may further send a prediction result of photovoltaic power generation power to the dispatching system 206, the visual workbench 205, and the like shown in FIG. 2 for a next operation, or may further send a prediction result to the data storage server 204 for storage and backup. Details are not described herein.

In an inference phase, the execution device 310 may invoke data, code, and the like in the data storage system 350, or may store data, instructions, and the like in the data storage system 350. The data storage system 350 may be configured on the execution device 310, or the data storage system 350 may be an external memory relative to the execution device 310. The calculation module 311 implements power prediction for each piece of input data based on the obtained model 301.

In FIG. 3, the I/O interface 312 is configured for the execution device 310 for exchanging data with an external device, and a "user" may input data to the I/O interface 312 via the client device 340. For example, the client device 340 may be the weather server 202 that is wirelessly connected to the weather forecast platform 201 shown in FIG. 2, and historical power data (like historical photovoltaic power generation power data or historical load power data) stored in the weather server 202 and historical predicted meteorological data are input as input data to the calculation module 311 of the execution device 310. The calculation module 311 predicts the input data to obtain a prediction result, and outputs the prediction result to another device or directly displays the prediction result on a display interface (if any) of the execution device 310. In addition, in some implementations of this application, the client device 340 may alternatively be integrated into the execution device 310. For example, when the execution device 310 is a mobile phone, the execution device 310 may directly obtain a target task via the mobile phone or receive a target task sent by another device (for example, another mobile phone). The calculation module 311 of the mobile phone predicts the target task to obtain a prediction result, and directly presents the prediction result on a display interface of the mobile phone. Product forms of the execution device 310 and the client device 340 are not limited herein.

It should be noted that FIG. 3 is merely a diagram of a system architecture according to an embodiment of this application. A location relationship between the devices, the components, the modules, and the like shown in the figure does not constitute any limitation. For example, in FIG. 3, the data storage system 350 is an external memory relative to the execution device 310, or in another case, the data storage system 350 may be configured on the execution device 310. In FIG. 3, the client device 340 is an external device relative to the execution device 310, or in another case, the client device 340 may be integrated in the execution device 310.

In some embodiments of this application, for example, in FIG. 3, the training device 320 and the execution device 310 are independently distributed devices. However, FIG. 3 is merely the diagram of the architecture of the task processing system according to this embodiment of the present invention, and the location relationship between the devices, the components, the modules, and the like shown in the figure do not constitute any limitation. In some other embodiments of this application, the training device 320 and the execution device 310 may be integrated into a same device. Further, the example in FIG. 3 is not intended to limit a quantity of devices of each type. For example, the database 330 may communicate with a plurality of client devices 340.

It should be further noted that the training process of the model 301 in this embodiment of this application may be implemented on a cloud side. For example, the training device 320 on the cloud side (the training device 320 may be disposed on one or more servers or virtual machines) may obtain a training set, and train the model based on a plurality of groups of training data (or referred to as training samples) of the training set to obtain the trained model 301. The trained model 301 is sent to the execution device 310 for application. For example, in the system architecture corresponding to FIG. 3, the training device 320 trains the model, and sends the trained model 301 to the execution device 310 for use. The training of the model 301 in the foregoing embodiment may alternatively be implemented on a terminal side, that is, the training device 320 may be located on the terminal side. For example, a terminal device (like a mobile phone or a smart watch) may obtain a training set, and train the model based on a plurality of groups of training data of the training set to obtain the trained model 301. The trained model 301 may be directly used by the terminal device, or may be sent by the terminal device to another device for use. Specifically, in this embodiment of this application, a device (a cloud side or a terminal side) on which the model 301 is trained or applied is not limited.

With reference to the foregoing description, embodiments of this application provide a model training method and a power prediction method, which are separately applied to a training phase and an inference phase of a model. The following separately provides description.

1. Training phase

In this embodiment of this application, the training phase is a process in which the training device 320 in FIG. 3 performs a training operation on the model 301 (including at least the first model 3001 and the second model 3002) based on the training data and the validation data in the dataset, that is, a process of training the model based on a loss function constructed in this application.

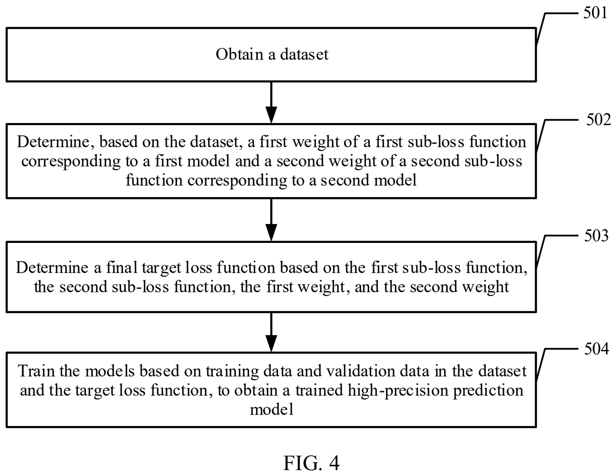

A method procedure in the training phase provided in this application may be shown in FIG. 4. The method provided in this application may specifically include the following steps.

501: Obtain a dataset.

The dataset may include training data and validation data, and a data type of the dataset includes at least historical power data (for example, power data obtained through sampling in past 24 hours) in preset duration t (for example, the past 24 hours) and historical meteorological data (for example, meteorological data obtained through sampling in the past 24 hours). The historical meteorological data may include weather, temperature, humidity, cloud layer data, or the like.

In addition, in different application scenarios, the dataset may further include scenariorelated data. For example, in a load prediction scenario, the dataset may further include loadrelated text data, image data, or the like. In a photovoltaic power generation scenario:

In a possible implementation, the historical meteorological data may include historical real meteorological data (for example, the meteorological data obtained through sampling in the past 24 hours) and historical predicted meteorological data (for example, real-time predicted meteorological data that is predicted in the past 24 hours and that is collected in correspondence with a real meteorological data sampling moment) corresponding to the historical real meteorological data. Therefore, when the historical meteorological data is collected, the real meteorological data and the predicted meteorological data may be collected at the same time, to perform model update based on multi-modal data, and obtain a high-precision prediction model with a better prediction result.

In addition, in a time dimension, the dataset may include historical real meteorological data in a first time period and corresponding historical predicted meteorological data, and historical predicted meteorological data in a second time period. The first time period and the second time period are data in different time periods, and the second time period is usually a time period after the first time period. Data in the first time period may be used to calculate a first weight and a second weight mentioned below, and data in the second time period may be used for model training. Certainly, model training may be performed based on data in both the first time period and the second time period. This is not limited in this application.

In a possible implementation, the historical power data may include power generation power or load power, the power generation power includes power generated by a power generation device through power generation, for example, photovoltaic power generation power of a photovoltaic power generation device, and the load power is power of electric energy consumed by one or more devices.

502: Determine a first weight of a first sub-loss function corresponding to a first model and a second weight of a second sub-loss function corresponding to a second model based on the dataset.

Usually, the first weight and the second weight may be calculated based on the historical real meteorological data in the first time period of the dataset and the corresponding historical predicted meteorological data.

For specific steps of step 502, refer to the following description of step 402. Details are not described herein.

503: Determine a final target loss function based on the first sub-loss function, the second sub-loss function, the first weight, and the second weight.

After the first sub-loss function, the second sub-loss function, the first weight, and the second weight are obtained, the first sub-loss function may be weighted based on the first weight, and the second sub-loss function may be weighted based on the second weight, to obtain the final target loss function.

For specific steps of step 503, refer to the following description of step 403. Details are not described herein.

504: Train the models based on the training data and the validation data in the dataset and the target loss function, to obtain a trained high-precision prediction model.

The trained model includes at least a trained first model and a trained second model, and the trained model may be deployed online, to complete a prediction task of real-time power data (like the power generation power or the load power). The first model and the second model may be used to represent input data, and data represented by the first model is not completely the same as data represented by the second model.

For example, specifically, the first model and the second model may represent the data in different dimensions. For example, the first model and the second model may represent different types of data, or respectively represent time domain data and frequency domain data. Optionally, the first model may be used to perform global representation on the historical power data and the historical meteorological data, and the second model is used to perform local representation on the historical meteorological data.

For example, a time series prediction model (for example, a TFC model) may convert original time series data (for example, the power data) into frequency domain data, perform representation on the time series data, and perform other different representation on the frequency domain data.

Optionally, the trained model may further include more models, and may be further used to represent the input data in a manner different from that of the first model and the second model. This may be specifically determined based on an actual application scenario. Details are not described herein again.

In addition, in a training process, the historical predicted meteorological data in the second time period of the dataset may be used as input of the model for training.

Correspondingly, when the historical power data includes the power generation power, the prediction model obtained through training may be used to predict the power generation power; and when the historical power data includes complex power, the prediction model obtained through training may be used to predict load power of a power-consuming device. Therefore, according to the method provided in this application, the training data may be selected based on an actual requirement, to implement meteorology-based power generation power prediction or load power prediction.

Therefore, according to the method provided in this application, more complete information can be obtained from different modal data (that is, data types such as the historical power data, historical real meteorological data, and historical predicted meteorological data) and different time scales (that is, the preset duration, for example, the past 24 hours, which may be customized, where different customized lengths indicate different time scales) based on a currently available data source, to optimize the learning model and achieve higher prediction precision.

The method provided in this application may be applied to a power generation power prediction scenario, or may be applied to the load prediction scenario. The following uses a photovoltaic power generation power scenario as an example for description. It should be noted that photovoltaic power generation power mentioned below may be replaced with load power, that is, load consumption power of one or more power-consuming devices, or may be replaced with power generated in another power generation manner. Details are not described below again.

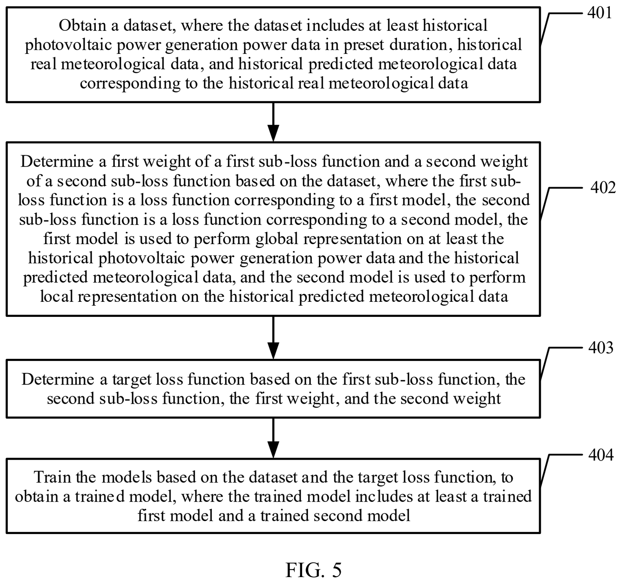

FIG. 5 is a schematic flowchart of a model training method according to an embodiment of this application. The method may specifically include the following steps.

401: Obtain a dataset, where the dataset includes at least historical photovoltaic power generation power data in preset duration, historical real meteorological data, and historical predicted meteorological data corresponding to the historical real meteorological data.

First, a training device may first obtain the dataset. The dataset may include training data and validation data, and a data type of the dataset includes at least historical photovoltaic power generation power data (for example, photovoltaic power generation power data obtained through sampling in past 24 hours) in preset duration t (for example, the past 24 hours), historical real meteorological data (for example, real meteorological data obtained through sampling in the past 24 hours), and historical predicted meteorological data (for example, real-time predicted meteorological data that is predicted in the past 24 hours and that is collected in correspondence with a real meteorological data sampling moment) corresponding to the historical real meteorological data.

It should be noted that, in this embodiment of this application, different time scales are reflected based on the preset duration t, that is, the preset duration t may be customized (for example, the past 24 hours). Different defined lengths indicate different predicted time scales, and are determined based on a specific application scenario. This is not limited in this application.

402: Determine a first weight of a first sub-loss function and a second weight of a second sub-loss function based on the dataset, where the first sub-loss function is a loss function corresponding to the first model, the second sub-loss function is a loss function corresponding to the second model, the first model is used to perform global representation on at least the historical photovoltaic power generation power data and the historical predicted meteorological data, and the second model is used to perform local representation on the historical predicted meteorological data.

Then, the training device may further determine, based on the dataset, a weight (which may be referred to as the first weight) of a loss function (which may be referred to as the first sub-loss function) corresponding to the first model and a weight (which may be referred to as the second weight) of a loss function (which may be referred to as the second sub-loss function) corresponding to the second model.

It should be noted that, in embodiments of this application, a type of the second model is not limited. For example, the second model may be a TCN, an RNN, an LSTM network, an MLP, or the like. Similarly, in embodiments of this application, the first model may include a plurality of submodels. Similarly, types of the submodels are not limited in this application. For example, the submodels that form the first model may also be TCNs, RNNs, LSTM networks, MLPs, or the like. This is not specifically limited in this application.

This step belongs to a process of preprocessing the dataset. A core idea of this step is obtaining weights of losses of different models (for example, the first model and the second model) based on the training data and the validation data in the dataset, and constructing a final target loss function based on the calculated different weights. Based on this, the models are trained to obtain a high-precision prediction model. The process of calculating the loss weights of the different models may also be referred to as multi-modal loss weight calculation, and a corresponding calculation module may be referred to as a multi-modal loss weight calculation module, and belongs to a data preprocessing module.

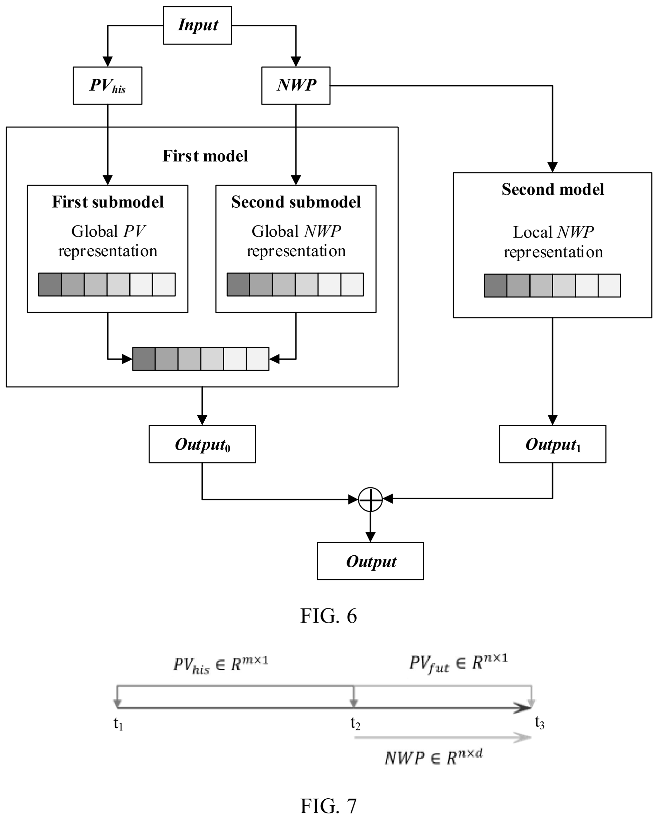

It should be noted that, in this embodiment of this application, the first model is used to perform global representation on at least the historical photovoltaic power generation power data and the historical predicted meteorological data in the dataset, and the second model is used to perform local representation on the historical predicted meteorological data in the dataset. In other words, input of the first model is the historical photovoltaic power generation power data and the historical predicted meteorological data, and input of the second model is the historical predicted meteorological data. However, it should be noted herein that the historical predicted meteorological data and the historical photovoltaic power generation power data that are input to the first model may be in different time periods. In the input of the first model, a time period (which may be referred to as a time period $[t_1, t_2]$) of the input historical photovoltaic power generation power data is before a time period (which may be referred to as a time period $[t_2, t_3]$) of the input historical predicted meteorological data, where $t_2$ is a time point for dividing a to-be-predicted future time period. For details, refer to problem descriptions in FIG. 7. To be specific, when photovoltaic power generation power data (that is, $PV_{fut} \in R^{n \times 1}$) in the time period $[t_2, t_3]$ after a current moment $t_2$ needs to be predicted, the historical photovoltaic power generation power data (that is, $PV_{his} \in R^{m \times 1}$) in the time period $[t_1, t_2]$ and the historical predicted meteorological data (that is, $NWP \in R^{n \times d}$, which is referred to as the historical predicted meteorological data because the predicted meteorological data may be predicted in advance by a weather forecast platform) in the time period $[t_2, t_3]$ are input. Certainly, in some other implementations of this application, time periods of various historical data input to the first model may be different. This is merely an example. This is not specifically limited in this application.

Specifically, in some other implementations of this application, the first model may include a plurality of submodels, and is used to perform global representation on different types of historical data. For example, specifically, refer to FIG. 6. A structure including the first model and the second model may be referred to as a multi-modal multi-scale information fusion module. This module performs information extraction to train a corresponding model. A core idea of this module is performing multi-scale information fusion based on multi-modal data. As shown in FIG. 6, the module may be divided into the first model and the second model based on different information extraction scales. The first model is used to extract global information to obtain global representation, and the second model is used to extract local information to obtain local representation. In addition, the first model may be further divided into different submodels based on different data modalities. For example, the first model may include at least a first submodel and a second submodel. Input of the first submodel is historical photovoltaic power generation power data of a dataset, and is used to perform global representation on the historical photovoltaic power generation power data. Input of the second submodel is historical predicted meteorological data in the dataset, and is used to perform global representation on the historical predicted meteorological data. It should be noted that FIG. 6 is merely an example. In some other implementations of this application, if there are more types of data in the dataset, the first model may further include more submodels, to perform global representation on more different types of data. A representation manner is similar to that of the first submodel and the second submodel. Details are not described herein again.

For ease of understanding the foregoing process, the following uses a specific example as an example to describe a processing process of models. It should be noted first that a photovoltaic power generation power prediction task may be classified into short-term prediction and ultra-short-term prediction based on different prediction time granularities (for example, a granularity of 15 minutes or a granularity of 1 hour) and time lengths (for example, prediction in future 4 hours, 24 hours, or 72 hours). This example specifically describes a process of a short-term prediction task for prediction in future 24 hours at a granularity of 1 hour. Another task is similar and is not described herein. Specific descriptions of a problem may be shown in FIG. 7. It is assumed that specified input is $PV_{his} \in R^{m \times 1}$ and $NWP \in R^{n \times d}$, and output is $PV_{fut} \in R^{n \times 1}$. This is specifically described as specifying historical photovoltaic power generation power data, m steps (that is, a length of input, for example, if data in historical 24 hours is used, m=24, where m and n may be different, and accuracy is high if m is the same as n), NWP data, n steps (that is, a to-be-predicted time length, for example, if photovoltaic power generation power data in the future 24 hours needs to be predicted, n=24), and d-dimensional data (for example, dimension data like illumination, temperature, and humidity). Future photovoltaic power generation power values in future n steps need to be predicted. It should be noted that n and m may be the same or may be different. This is not limited in this application. It can be learned from FIG. 6 that the first model is used to extract global information to obtain global representation, and the second model is used to extract local information to obtain local representation. In addition, the first model is further divided into different first submodels and second submodels based on different data modalities. The first submodel receives historical photovoltaic power generation power data (that is, $PV_{his} \in R^{m \times 1}$) modality as input, and obtains global representation of historical PV information in m (it is assumed that a current task m is set to 24) time steps. The second submodel uses NWP (that is, $NWP \in R^{n \times d}$) modal data as input, and obtains global representation of NWP information in n (it is assumed that a current task n is set to 24) time steps. Representation of different modalities may be fused, to obtain representation of global input information from data of the different modalities. For example, mapping to output may be completed based on an MLP model and global multi-modal representation, to obtain output $Output_0$. It should be noted herein that global representation of different submodels may not be fused, and output $Output_{01}$ and $Output_{02}$ of the submodels is directly obtained.

Similarly, the second model is used as a local scale representation module, and uses the NWP (that is, $NWP \in R^{n \times d}$) modal data as the input to perform information modeling on a local time scale. A specific manner is as follows: For each time step of photovoltaic future prediction power generation power $PV_{fut} \in R^{n \times 1}$, there is NWP data that is in a one-to-one correspondence with each time step and PV data that needs to be predicted. It should be noted that a scale of the local representation is not fixed, and is a hyperparameter. The scale of the local representation represents a window size, and the window size is defined by a specific task. In this embodiment, it is assumed that a selected time window is 1 (a size of the time window is manually set, and only local representation learning needs to be completed). To be specific, only NWP data at a corresponding time point is used to predict a PV value at the corresponding time point, so that local NWP representation may be obtained based on the second model, and direct mapping from the local NWP representation to the PV value is completed, to obtain a module output value $Output_1$.

It should be further noted that, in some implementations of this application, the historical real meteorological data in the first time period and the historical predicted meteorological data in the dataset may include at least a first sub-dataset and a second sub-dataset. For example, the historical real meteorological data in the first time period and the historical predicted meteorological data in the dataset may be divided into the first sub-dataset and the second sub-dataset based on a specified proportion (for example, 7:3 and 6:4, which may be customized). The first sub-dataset may also be referred to as a training dataset, and the second sub-dataset may also be referred to as a validation dataset. Historical real meteorological data and historical predicted meteorological data included in the first sub-dataset may be respectively referred to as first historical real meteorological data (which may be denoted as $NWD_1$) and first historical predicted meteorological data (which may be denoted as $NWP_1$). Historical real meteorological data and historical predicted meteorological data included in the second sub-dataset may be referred to as second historical real meteorological data (which may be denoted as $NWD_2$) and second historical predicted meteorological data (which may be denoted as $NWP_2$). In this case, an implementation of determining the first weight of the first sub-loss function and the second weight of the second sub-loss function based on the dataset may be as follows: Accuracy (which may be referred to as first accuracy) of the first historical predicted meteorological data $NWP_1$ of the first sub-dataset is determined based on data in the first sub-dataset, and accuracy (which may be referred to as second accuracy) of the second historical predicted meteorological data $NWP_2$ of the second sub-dataset is determined based on data in the second sub-dataset. Then, the first weight of the first sub-loss function is determined based on the first accuracy and the second accuracy that are obtained through calculation. After the first weight is obtained, the second weight of the second sub-loss function may be further determined based on the first weight.

Specifically, in some implementations of this application, the first accuracy and the second accuracy may be calculated in the following manners, which are separately described below:

(1) Calculation of the first accuracy

For calculation the first accuracy, data slicing may be performed on data of a current training set (that is, the first sub-dataset) by using a time window size of the preset duration t (for example, 24 hours), to obtain M slice segments (which may be referred to as first slice segments, and may be denoted as $Q_i$, where $1 \leq i \leq M$). Then, accuracy $ACC_{1i}$ of first historical predicted meteorological data $NWP_{1i}$ in each first slice segment $Q_i$ is calculated based on first historical real meteorological data $NWD_{1i}$ and the first historical predicted meteorological data $NWP_{1i}$ in each first slice segment $Q_i$, where the accuracy may be referred to as first target accuracy. Based on this, M pieces of first target accuracy (that is, $ACC_{11}$, $ACC_{12}$, ..., and $ACC_{1M}$) may be obtained in total. For example, it is assumed that first slice segments obtained through data slicing are 5 (that is, M=5), and are respectively denoted as first slice segments $Q_1$ to $Q_5$. First historical real meteorological data (which may be a plurality of pieces of sampled data) included in the first slice segments $Q_1$ to $Q_5$ is respectively denoted as $NWD_{11}$ to $NWD_{15}$, and first historical predicted meteorological data (which may be a plurality of pieces of sampled data) included in the first slice segments $Q_1$ to $Q_5$ is respectively denoted as $NWP_{11}$ to $NWP_{15}$. For the first slice segment $Q_1$, the first target accuracy $ACC_{11}$ of the first historical predicted meteorological data $NWP_{1i}$ of the first slice segment $Q_1$ may be calculated based on the first historical real meteorological data $NWD_{11}$ and the first historical predicted meteorological data $NWP_{11}$. Similarly, for the first slice segment $Q_2$, the first target accuracy $ACC_{12}$ of the first historical predicted meteorological data $NWP_{12}$ of the first slice segment $Q_2$ may be calculated based on the first historical real meteorological data $NWD_{12}$ and the first historical predicted meteorological data $NWP_{12}$. The rest may be deduced by analogy. The first target accuracy $ACC_{11}$ to $ACC_{15}$ of the first historical predicted meteorological data $NWP_{11}$ to $NWP_{15}$ respectively corresponding to all the first slice segments $Q_1$ to $Q_5$ may be calculated.

It should be noted that, in this embodiment of this application, a calculation method for the first target accuracy $ACC_{1i}$ may be customized based on an actual requirement. In an example, a calculation method may be obtained through calculation according to a formula: $ACC_{1i} = |NWD_{1i} - NWP_{1i}| \div NWD_{1i}$.

After the M pieces of first target accuracy $ACC_{1i}$ are obtained, statistical features of the M pieces of first target accuracy $ACC_{1i}$ may be obtained accordingly, for example, statistical features such as a mean value $ACC_{mean}$ of the M pieces of first target accuracy $ACC_{1i}$, a minimum value $ACC_{min}$ of the M pieces of first target accuracy $ACC_{1i}$, and a maximum value $ACC_{max}$ of the M pieces of first target accuracy $ACC_{1i}$. Finally, final first accuracy may be determined based on the M pieces of first target accuracy $ACC_{1i}$, and the first accuracy may be one or more of the foregoing statistical features $ACC_{mean}$, $ACC_{min}$, and $ACC_{max}$.

(2) Calculation of the second accuracy

For calculation of the second accuracy, in some implementations of this application, a manner in which the training device determines the second accuracy of the second historical predicted meteorological data $NWP_2$ based on data in the second sub-dataset (that is, the validation dataset) is similar to the foregoing manner of determining the first accuracy. Specifically, data slicing is performed on the data in the second sub-dataset, to obtain N slice segments (which may be referred to as second slice segments, and may be denoted as $P_j$, where $1 \leq j \leq N$). Then, accuracy $ACC_{2j}$ of second historical predicted meteorological data $NWP_{2j}$ in each second slice segment $P_j$ is calculated based on second historical real meteorological data $NWD_{2j}$ and the second historical predicted meteorological data $NWP_{2j}$ in each second slice segment $P_j$, where the accuracy may be referred to as second target accuracy. Based on this, N pieces of second target accuracy (that is, $ACC_{21}$, $ACC_{22}$, ..., and $ACC_{2N}$) may be obtained in total.

Finally, second accuracy acc is determined based on the N pieces of second target accuracy $ACC_{2j}$. It should be noted herein that the second accuracy acc may be a mean value of the N pieces of second target accuracy $ACC_{2j}$, that is, second accuracy acc = $(ACC_{21} + ACC_{22} + ... + ACC_{2N}) \div N$.

After obtaining the first accuracy (that is, one or more of $ACC_{mean}$, $ACC_{min}$, and $ACC_{max}$) and the second accuracy (that is, acc) through calculation, the training device may convert, based on the first accuracy and the second accuracy by using a corresponding conversion mechanism, the first accuracy and the second accuracy into the first weight w of the first sub-loss function corresponding to the first model and the second weight 1-w of the second sub-loss function corresponding to the second model. In an example, the first weight w may be calculated by using a conversion mechanism in the following formula (1):

$$w = \begin{cases} 1 - ACC_{max}, acc > ACC_{max} \\ 0.5 + (ACC_{mean} - acc), others \\ 1 - ACC_{min}, acc < ACC_{min} \end{cases} \tag{1}$$

It should be noted that the conversion mechanism in the foregoing formula (1) uses all statistical features $ACC_{mean}$, $ACC_{min}$, and $ACC_{max}$, so that precision of calculating the first weight w can be improved. However, in some other implementations of this application, the conversion mechanism may be any one or two of the statistical features $ACC_{mean}$, $ACC_{min}$, and $ACC_{max}$. This is not limited in this application.

It should be further noted that, in this embodiment of this application, a value of the first weight w need to be inversely correlated with a value of the second accuracy acc (for example, the formula (1) meets the inverse correlation). A specific function of the inverse correlation is that when prediction precision of the NWP data in the validation data is low (that is, the second accuracy is low), a lower weight (that is, a small value of the second weight 1-w) is assigned to a model (that is, the second model) used for local representation, and a higher weight (that is, a large value of w) is assigned to a model (that is, the first model) used for global representation, to moderate impact caused by insufficient precision of the NWP data of the validation set based on global information. This focuses on extraction of the global information. On the contrary, when the prediction precision of the NWP data in the validation data is high (that is, the second accuracy is high), a higher weight (that is, a large value of 1-w) is assigned to the model (that is, the second model) used for local representation, to obtain more important information based on the model.

403: Determine the target loss function based on the first sub-loss function, the second sub-loss function, the first weight, and the second weight.

After the first weight w and the second weight 1-w are obtained, the final target loss function $Loss_{total}$ may be determined based on the first sub-loss function (that is, $Loss_{output_0}$), the second sub-loss function (that is, $Loss_{output_1}$), the first weight w, and the second weight 1-w. Specifically, the target loss function $Loss_{total}$ may be represented by a formula (2):

$$Loss_{total} = w * Loss_{output_0} + (1 - w) * Loss_{output_1} \tag{2}$$

It should be noted that a prerequisite of the foregoing formula (2) is a form obtained by combining output results of all submodels (for example, the first submodel and the second submodel) included in the first model. In some other implementations of this application, the output results of all the submodels may not be combined, and output $Output_{01}$ and $Output_{02}$ of all the submodels is directly obtained. In this case, the target loss function $Loss_{total}$ may be represented by a formula (3):

$$Loss_{total} = w * Loss_{output_{01}} + w * Loss_{output_{02}} + (1 - w) * Loss_{output_1} \tag{3}$$

It should be noted that, if the first model further includes more submodels (that is, other than the first submodel and the second submodel), a loss function $Loss_{output_{0k}}$ of output $Output_{0k}$ of another submodel is correspondingly added to the target loss function $Loss_{total}$, where k is a number of the submodel, and a weight of a loss function $Loss_{output_{0k}}$ of each submodel may also be w.

It should be further noted that, types of loss functions of sub-items on the right side of the foregoing formula (2) or formula (3) are not limited, for example, may be a mean absolute error (mean absolute error, MAE) loss function. In addition, types of sub-loss functions may be the same, or may be different. This is not specifically limited in this application.

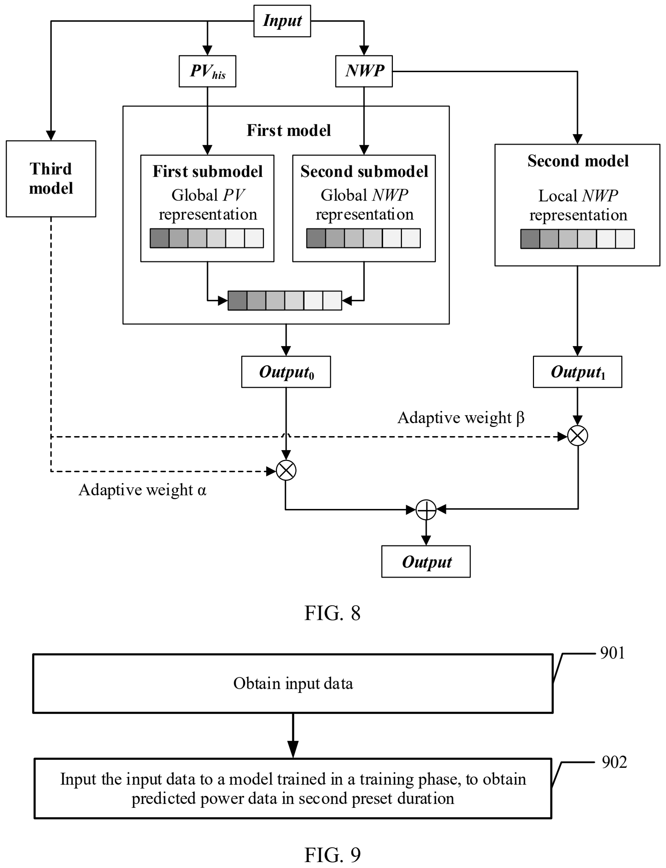

It should be noted that, in some implementations of this application, the model may further include a third model, input of the third model is data (in an inference phase, the input of the third model is real-time input data) of the dataset. The third model may be an MLP, or may be another type of neural network with a self-attention mechanism. This is not specifically limited in this application. The input data may be some or all data in the dataset. This is not specifically limited in this application. Output of the third model is a first adaptive weight $\alpha$ of the first model and a second adaptive weight $\beta$ of the second model, and the third model is used to combine an output result $Output_0$ (for ease of description, a combined output result is used as an example in this application) of the first model and an output result $Output_1$ of the second model based on the first adaptive weight $\alpha$ and the second adaptive weight $\beta$, to obtain a final prediction result $Output$. The third model can make the prediction result more accurate. Specifically, refer to FIG. 8. The third model is used as an adaptive weighting module, and a core idea of the third model is how to combine the results of the first model and the second model to obtain the final output. For ease of understanding, the foregoing example is still used. For example, $PV_{his}$ of the sample and a prediction point $NWP_i$ of the sample are spliced and used as input of the prediction point of the sample, and adaptive weights $\alpha$ and $\beta$ of prediction points of the prediction sample for the first model and the second model may be obtained based on the third model, to combine the results from the first model and the second model to obtain the final prediction result $Output$. That is, $Output_i = \alpha Output_{0i} + \beta Output_{1i}$, where $\alpha + \beta = 1$, and the subscript i represents prediction in an $i^{th}$ time step of a sample.

It should be noted that if the model further includes the third model, the constructed target loss function $Loss_{total}$ further needs to include a loss function corresponding to the third model. In this case, the final target loss function $Loss_{total}$ is determined based on the first sub-loss function $Loss_{output_0}$ (in a case of combination), the second sub-loss function $Loss_{output_1}$, the first weight w, the second weight 1-w, and a third sub-loss function $LOSS_{output}$ that corresponds to the third model, which may be specifically shown in a formula (4):

$$Loss_{total} = Loss_{output} + w * Loss_{output_0} + (1 - w) * Loss_{output_1} \qquad (4)$$

If the output results of the submodels are not combined, the final target loss function $Loss_{total}$ may be shown in a formula (5):

$$Loss_{total} = Loss_{output} + w * Loss_{output_{01}} + w * Loss_{output_{02}} + (1 - w) *$$

$$Loss_{output_1} \qquad (5)$$

404: Train the models based on the dataset and the target loss function, to obtain a trained model, where the trained model includes at least a trained first model and a trained second model.

Finally, the training device may train the models based on the training data and the validation data in the dataset, and the target loss function $Loss_{total}$ (that is, complete n epochs, where n can be customized, for example, n=100), to obtain the trained high-precision prediction model. The trained model includes at least the trained first model and the trained second model, and the model may be deployed online, to complete a prediction task of real-time photovoltaic power generation power data.

2. Inference phase

In embodiments of this application, the inference phase is that the execution device 310 in FIG. 3 uses the trained model 301 (including at least the trained first model 3001 and the trained second model 3002). The trained model may be used to predict power generation power or consumption power. For example, a model obtained through training based on historical power generation power data may be used to complete prediction of real-time photovoltaic power generation power data, or a model obtained through training based on historical load power data may be used in a process of a prediction task of load power data of one or more power-consuming devices.

Specifically, a procedure of the prediction method used in this application may be shown in FIG. 9, and may specifically include the following steps.

901: Obtain input data.

The input data may include historical power data in first preset duration (for example, 24 hours before a current moment) and predicted meteorological data in second preset duration (for example, 24 hours after the current moment). The predicted meteorological data may also be referred to as historical predicted meteorological data.

902: Input the input data to a model trained in a training phase, to obtain predicted power data in the second preset duration.

After the input data is obtained, the input data is input to the models (for example, the trained first model and the trained second model) trained in the foregoing training phase, to obtain predicted power data at at least one preset moment (for example, if the second preset duration is 24 hours, and a prediction time granularity is 1 hour, preset moments include a total of 24 moments in the future 24 hours) in the future to-be-predicted second preset duration.

In the foregoing implementation of this application, real-time predicted meteorological data and the historical power data are used as input, and the high-precision model obtained through training in the foregoing training phase are used to complete an inference process, and an inference result is fed back, so that prediction precision of the inference result is high.

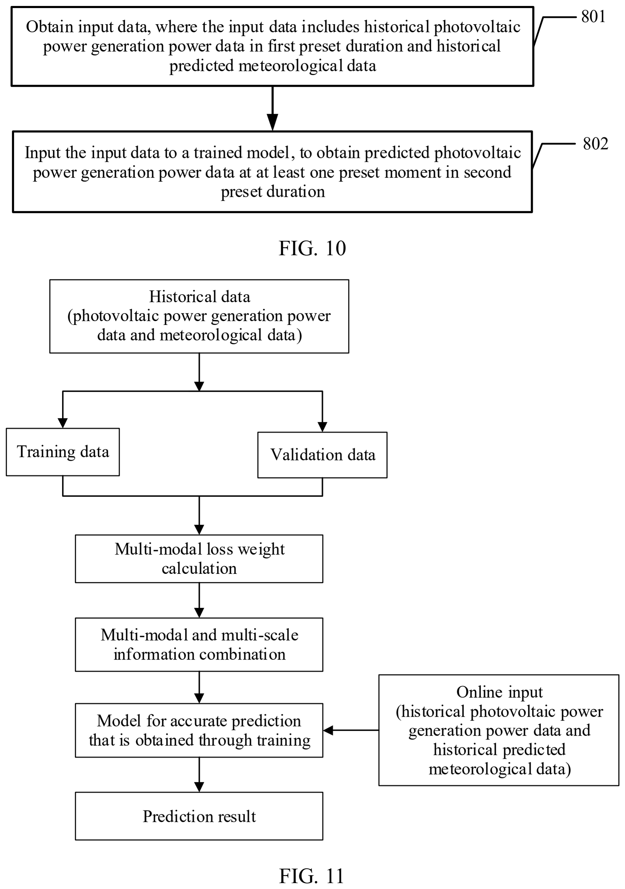

Specifically, the method provided in this application may be applied to a power generation scenario, a load prediction scenario, or the like. For example, photovoltaic power generation application scenario is used as an example. Specifically, FIG. 10 is a schematic flowchart of a power prediction method according to an embodiment of this application. The method may specifically include the following steps.

801: Obtain input data, where the input data includes historical photovoltaic power generation power data in first preset duration and historical predicted meteorological data.

An execution device may obtain the input data. The input data includes historical photovoltaic power generation power data in preset duration (which may be referred to as the first preset duration, for example, the foregoing m steps) and historical predicted meteorological data in second preset duration (that is, future to-be-predicted duration, for example, the foregoing n steps). The historical photovoltaic power generation power data and the historical predicted meteorological data may be read from the data storage server 204 shown in FIG. 2. Initial historical predicted meteorological data may be obtained based on the weather forecast platform 201 shown in FIG. 2.

802: Input the input data to a trained model, to obtain predicted photovoltaic power generation power data at at least one preset moment in the second preset duration.

Then, after obtaining the input data, the execution device may input the input data to the models (for example, the trained first model and the trained second model) trained in the foregoing training phase, to obtain predicted photovoltaic power generation power data at at least one preset moment (for example, if the second preset duration is 24 hours, and a prediction time granularity is 1 hour, preset moments include a total of 24 moments in the future 24 hours) in future to-be-predicted preset duration (which may be referred to as the second preset duration, for example, the foregoing n steps).

In this embodiment of this application, for details about how the trained model is obtained through training based on a constructed objective loss function, refer to related description in embodiments corresponding to FIG. 4 and FIG. 10. Details are not described herein again.

In conclusion, as an algorithm framework structure, the method in embodiments of this application does not depend on or specify a basic network structure, is not limited to selection of a basic model, and has strong generalization. A specific overall algorithm framework may be shown in FIG. 11. In a data preprocessing process, in the method in this application, loss weights of different modalities are obtained, multi-scale information combination is completed based on multi-modal data, so that more complete information extraction is implemented. In addition, for output generated by data of different modalities and different scales, weighted fusion may be adaptively performed by adding a third model, to obtain a final prediction result, thereby improving accuracy of a model.

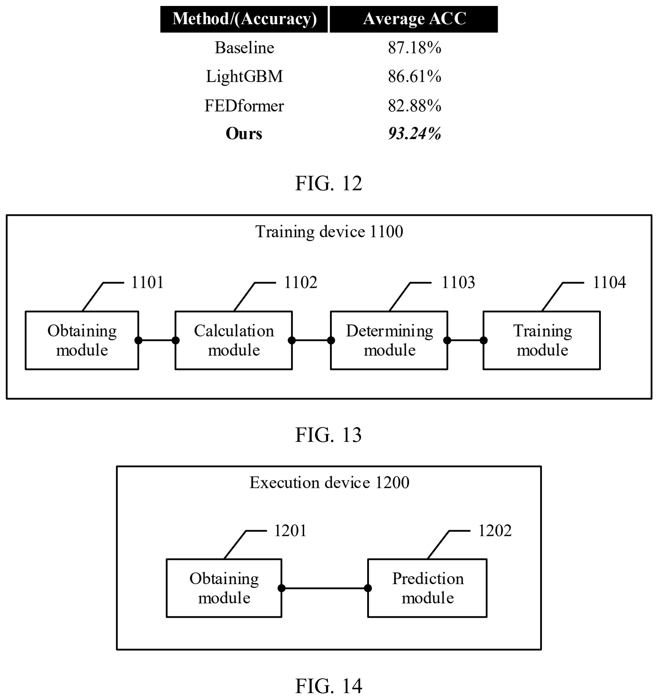

To have more intuitive understanding of beneficial effect brought by embodiments of this application, the following further compares technical effect brought by embodiments of this application. Specifically, in Huawei datasets, tests are performed on 13 commercial and industrial photovoltaic power plants in 10 provinces, and comparison is performed on other existing solutions. In terms of an average accuracy value and performance of a single plant, the method in this application achieves SOTA effect. Comparison effect of average accuracy may be shown in FIG. 12.

Based on the foregoing embodiments, the following further provides a related device used to implement the solutions, to better implement the solutions in embodiments of this application. Specifically, FIG. 13 is a diagram of a training device according to an embodiment of this application. A model is deployed on the training device, and the model includes at least a first model and a second model. The training device 1100 may specifically include an obtaining module 1101, a calculation module 1102, a determining module 1103, and a training module 1104. The obtaining module 1101 is configured to obtain a dataset. The dataset includes at least historical power data (like historical photovoltaic power generation power data or historical load power data) and historical meteorological data in preset duration. Optionally, the historical meteorological data may specifically include historical real meteorological data, historical predicted meteorological data corresponding to the historical real meteorological data, and the like. The calculation module 1102 is configured to determine a first weight of a first sub-loss function and a second weight of a second sub-loss function based on the dataset. The first sub-loss function is a loss function corresponding to the first model, the second sub-loss function is a loss function corresponding to the second model, the first model and the second model may be used to represent input data, and data represented by the first model is not completely the same as data represented by the second model. The determining module 1103 is configured to determine a target loss function based on the first sub-loss function, the second sub-loss function, the first weight, and the second weight. The training module 1104 is configured to train the model based on the dataset and the target loss function, to obtain a trained model. The trained model includes at least a trained first model and a trained second model. Input of the first model is the historical photovoltaic power generation power data and the historical meteorological data (for example, when the historical meteorological data includes the historical predicted meteorological data, the input of the first model includes the historical predicted meteorological data), and input of the second model is the historical meteorological data (for example, when the historical meteorological data includes the historical predicted meteorological data, the input of the second model includes the historical predicted meteorological data).

In a possible implementation of the first aspect, the first model and the second model may represent the data in different dimensions. For example, the first model and the second model may represent different types of data, or respectively represent time domain data and frequency domain data. Optionally, the first model may be used to perform global representation on the historical power data and the historical meteorological data, and the second model is used to perform local representation on the historical meteorological data.

In a possible design, the historical meteorological data includes historical real meteorological data in a first time period, corresponding historical predicted meteorological data, and historical predicted meteorological data in a second time period. The historical real meteorological data in the first time period and the corresponding historical predicted meteorological data are used to determine the first weight and the second weight, and the historical predicted meteorological data in the second time period is used to train the model.

In a possible design, the historical real meteorological data in the first time period and the corresponding historical predicted meteorological data may include a first sub-dataset and a second sub-dataset, the first sub-dataset includes first historical real meteorological data and first historical predicted meteorological data, and the second sub-dataset includes second historical real meteorological data and second historical predicted meteorological data. The calculation module 1102 is specifically configured to: determine first accuracy of the first historical predicted meteorological data based on the first sub-dataset; determine second accuracy of the second historical predicted meteorological data based on the second sub-dataset; determine the first weight of the first sub-loss function based on the first accuracy and the second accuracy; and determine the second weight of the second sub-loss function based on the first weight.

In a possible design, a value of the first weight is inversely correlated with a value of the second accuracy.

In a possible design, the calculation module 1102 is further specifically configured to: perform data slicing on data in the first sub-dataset to obtain M first slice segments; calculate first target accuracy of first historical predicted meteorological data in each first slice segment based on first historical real meteorological data and the first historical predicted meteorological data in each first slice segment, to obtain M pieces of first target accuracy; and determine the first accuracy based on the M pieces of first target accuracy. The first accuracy includes a maximum value, a minimum value, and/or a mean value of the M pieces of first target accuracy.

In a possible design, the calculation module 1102 is further specifically configured to: perform data slicing on data in the second sub-dataset to obtain N second slice segments; calculate second target accuracy of second historical predicted meteorological data in each second slice segment based on second historical real meteorological data and the second historical predicted meteorological data in each second slice segment, to obtain N pieces of second target accuracy; and determine the second accuracy based on the N pieces of second target accuracy. The second accuracy includes a mean value of the N pieces of second target accuracy.

In a possible design, the first model may include at least one of a first submodel and a second submodel. Input of the first submodel is the historical power data in the dataset, for example, the historical photovoltaic power generation power data or the historical load power data, and is used to perform global representation on the historical power data (the historical photovoltaic power generation power data or the historical load power data). Input of the second submodel is the historical predicted meteorological data in the dataset, and is used to perform global representation on the historical predicted meteorological data.

In a possible design, the model further includes a third model. Input of the third model is data in the dataset, and output of the third model is a first adaptive weight of the first model and a second adaptive weight of the second model. The third model is used to combine an output result of the first model and an output result of the second model based on the first adaptive weight and the second adaptive weight.

In a possible design, the determining module 1103 is specifically configured to determine the target loss function based on a third sub-loss function, the first sub-loss function, the second sub-loss function, the first weight, and the second weight. The third sub-loss function is a loss function corresponding to the third model.

In a possible design, the first submodel, the second submodel, and the second model include any one of the following: a TCN, an RNN, an LSTM network, and an MLP.

In a possible design, the third model includes any one of the following: an MLP and a neural network with a self-attention mechanism.

It should be noted that content like information exchange and an execution process between the modules/units in the training device 1100 is based on a same concept as the method embodiments corresponding to FIG. 4 and FIG. 5 in this application. For specific content, refer to the descriptions in the foregoing method embodiments in this application. Details are not described herein again.

An embodiment of this application further provides an execution device. For details, FIG. 14 is a diagram of an execution device according to an embodiment of this application. A trained model is deployed on the execution device, and the model includes at least a first model and a second model. The execution device 1200 may specifically include an obtaining module 1201 and a prediction module 1202. The obtaining module 1201 is configured to obtain input data. The input data includes historical photovoltaic power generation power data in first preset duration and historical predicted meteorological data in second preset duration. The prediction module 1202 is configured to input the input data to the trained model, to obtain predicted photovoltaic power generation power data at at least one preset moment in the second preset duration. The trained model includes at least a trained first model and a trained second model, the trained first model and the trained second model are used to represent the input data, data represented by the model is not completely the same as data represented by the second model, and representation output by the trained first model and representation output by the trained second model are used to obtain the predicted power data at the at least one preset moment in the second preset duration.

In a possible implementation, the trained first model may be used to perform global representation on the historical power data in the first preset duration or the predicted meteorological data in the second preset duration, the trained second model may be used to perform local representation on the predicted meteorological data in the second preset duration, and the global representation and the local representation may be used to obtain the predicted power data at the at least one preset moment in the second preset duration.

For a specific model training process, refer to the foregoing process of the training phase.

Optionally, the predicted power data at the at least one preset moment in the second preset duration includes power generation power or load power at the at least one preset moment in the second preset duration, the power generation power includes power generated by a power generation device through power generation, and the load power is power of electric energy consumed by one or more devices. Therefore, according to the method provided in this application, meteorology-based power generation power prediction or load power prediction can be implemented.

Optionally, the trained model is obtained through training based on a dataset and a target loss function, and the dataset includes at least historical power data and historical meteorological data in third preset duration. Optionally, the historical power data may include the historical photovoltaic power generation power data or historical load power data. The historical meteorological data may include historical real meteorological data and historical predicted meteorological data corresponding to the historical real meteorological data. The target loss function is determined based on a first sub-loss function, a second sub-loss function, a first weight of the first sub-loss function, and a second weight of the second sub-loss function. The first sub-loss function is a loss function corresponding to the first model, the second sub-loss function is a loss function corresponding to the second model, and the first weight and the second weight are determined based on the dataset.

In a possible design, the first model includes at least a first submodel and a second submodel. Input of the first submodel is the historical power data in the dataset, and is used to perform global representation on the historical power data. Input of the second submodel is the historical meteorological data in the dataset, and is used to perform global representation on the historical meteorological data. For example, for a photovoltaic power generation scenario, the input of the first submodel is the historical photovoltaic power generation power data, and is used to perform global representation on the historical photovoltaic power generation power data. The input of the second submodel is the historical predicted meteorological data, and is used to perform global representation on the historical predicted meteorological data. For a load prediction scenario, the input of the first submodel is the historical load power data, and is used to perform global representation on the historical complex power data. The input of the second submodel is the historical predicted meteorological data, and is used to perform global representation on the historical predicted meteorological data.

In a possible design, the model further includes a third model. Input of the third model is the input data, and output of the third model is a first adaptive weight of the first model and a second adaptive weight of the second model. The third model is used to combine an output result of the first model and an output result of the second model based on the first adaptive weight and the second adaptive weight.

In a possible design, the first submodel, the second submodel, and the second model include any one of the following: a TCN, an RNN, an LSTM network, and an MLP.

In a possible design, the third model includes any one of the following: an MLP and a neural network with a self-attention mechanism.

It should be noted that content like information exchange and an execution process between the modules/units in the execution device 1200 is based on a same concept as the method embodiment corresponding to FIG. 9 in this application. For specific content, refer to the descriptions in the foregoing method embodiments in this application. Details are not described herein again.

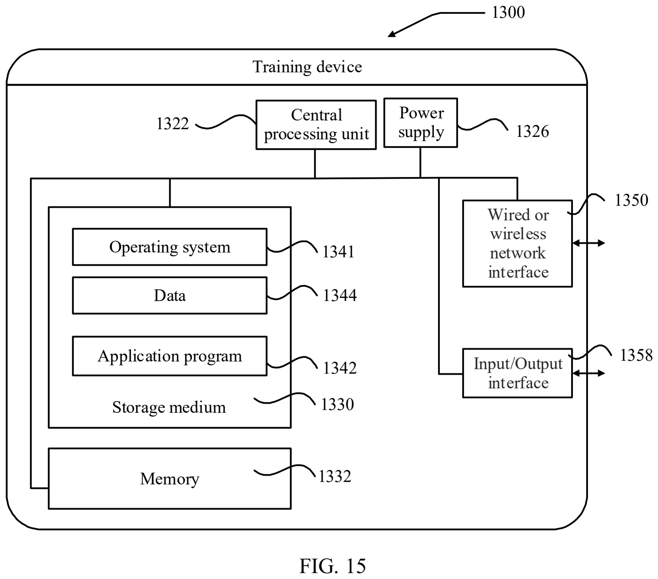

The following describes another training device provided in an embodiment of this application. FIG. 15 is a diagram of a structure of a training device according to an embodiment of this application. The training device 1100 described in the embodiment corresponding to FIG. 13 may be deployed on the training device 1300, and is configured to implement a function of the training device 1100 in the embodiment corresponding to FIG. 13. Specifically, the training device 1300 is implemented by one or more servers. The training device 1300 may have a large difference due to different configurations or performance, and may include one or more central processing units (central processing unit, CPU) 1322, a memory 1332, and one or more storage media 1330 (for example, one or more massive storage devices) that store an application program 1342 or data 1344. The memory 1332 and the storage medium 1330 may be transient storage or persistent storage. The program stored in the storage medium 1330 may include one or more modules (not shown in the figure), and each module may include a series of instruction operations for the training device 1300. Further, the central processing unit 1322 may be configured to: communicate with the storage medium 1330, and perform, on the training device 1300, the series of instruction operations in the storage medium 1330.

The training device 1300 may further include one or more power supplies 1326, one or more wired or wireless network interfaces 1350, one or more input/output interfaces 1358, and/or one or more operating systems 1341 such as Windows ServerTM, Mac OS XTM, UnixTM, LinuxTM, and FreeBSDTM.

In this embodiment of this application, the central processing unit 1322 is configured to perform the model training methods performed by the training devices in embodiments corresponding to FIG. 4 and FIG. 5. For example, the central processing unit 1322 may be configured to first obtain a dataset. The dataset may include training data and validation data, and a data type of the dataset includes at least historical photovoltaic power generation power data (for example, photovoltaic power generation power data obtained through sampling in past 24 hours) in preset duration t (for example, the past 24 hours), historical real meteorological data (for example, real meteorological data obtained through sampling in the past 24 hours), and historical predicted meteorological data (for example, real-time predicted meteorological data that is predicted in the past 24 hours and that is collected in correspondence with a real meteorological data sampling moment) corresponding to the historical real meteorological data. A first weight of a first sub-loss function and a second weight of a second sub-loss function are determined based on the dataset. The first sub-loss function is a loss function corresponding to a first model, the second sub-loss function is a loss function corresponding to a second model, the first model is used to perform global representation on at least the historical photovoltaic power generation power data and the historical predicted meteorological data, and the second model is used to perform local representation on the historical predicted meteorological data. After the first weight and the second weight are obtained, a target loss function is determined based on the first sub-loss function, the second sub-loss function, the first weight, and the second weight. Finally, the models are trained based on the training data and the validation data in the dataset, and the target loss function (that is, n epochs are completed, where n can be customized, for example, n=100), to obtain a trained high-precision prediction model. The trained model includes at least the trained first model and the trained second model, and the model may be deployed online, to complete a prediction task of real-time photovoltaic power generation power data.

It should be noted that a specific manner in which the central processing unit 1322 performs the foregoing steps is based on a same concept as the method embodiments corresponding to FIG. 4 and FIG. 5 in this application. Technical effect brought by the central processing unit 1322 is the same as that in the foregoing method embodiments of this application. For specific content, refer to the descriptions in the foregoing method embodiments in this application. Details are not described herein again.

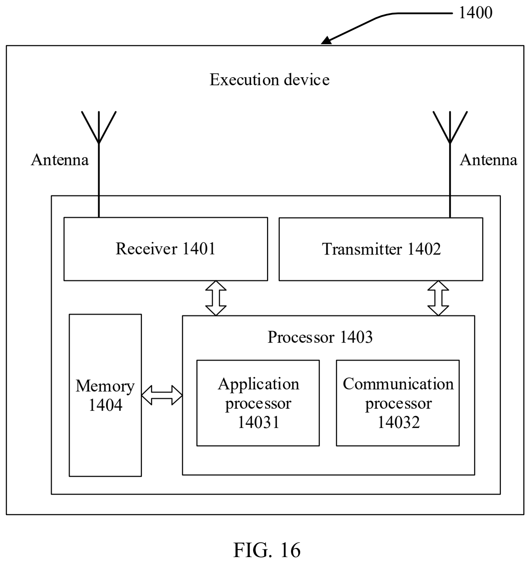

The following describes an execution device provided in an embodiment of this application. FIG. 16 is a diagram of a structure of an execution device according to an embodiment of this application. The execution device 1400 may be specifically represented as the optical power prediction server 203 shown in FIG. 2, or may be various other terminal devices such as a mobile phone, a tablet, a notebook computer, or a monitoring data processing device. This is not limited herein. The execution device 1200 described in the embodiment corresponding to FIG. 14 may be deployed on the execution device 1400, and is configured to implement a function of the execution device 1200 in the embodiment corresponding to FIG. 14. Specifically, the execution device 1400 includes a receiver 1401, a transmitter 1402, a processor 1403, and a memory 1404 (there may be one or more processors 1403 in the execution device 1400, and one processor is used as an example in FIG. 16). The processor 1403 may include an application processor 14031 and a communication processor 14032. In some embodiments of this application, the receiver 1401, the transmitter 1402, the processor 1403, and the memory 1404 may be connected through a bus or in another manner.

The memory 1404 may include a read-only memory and a random access memory, and provide instructions and data to the processor 1403. A part of the memory 1404 may further include a non-volatile random access memory (non-volatile random access memory, NVRAM). The memory 1404 stores a processor and operation instructions, an executable module or a data structure, a subset thereof, or an extended set thereof. The operation instructions may include various operation instructions for implementing various operations.

The processor 1403 controls an operation of the execution device 1400. During specific application, components of the execution device 1400 are coupled together through a bus system. In addition to a data bus, the bus system may further include a power bus, a control bus, a status signal bus, and the like. However, for clear description, various types of buses in the figure are referred to as the bus system.

The methods disclosed in embodiments corresponding to FIG. 9 and FIG. 10 in this application may be applied to the processor 1403, or may be implemented by the processor 1403. The processor 1403 may be an integrated circuit chip and has a signal processing capability. In an implementation process, steps in the foregoing methods can be implemented by using a hardware integrated logic circuit in the processor 1403, or by using instructions in a form of software. The processor 1403 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1403 may implement or perform the methods, steps, and logic block diagrams disclosed in the embodiment corresponding to FIG. 8 in this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1404, and the processor 1403 reads information in the memory 1404 and completes the steps in the foregoing methods in combination with hardware of the processor 1403.

The receiver 1401 may be configured to: receive input digital or character information, and generate signal input related to a related setting and function control of the execution device 1400. The transmitter 1402 may be configured to output digital or character information through a first interface. The transmitter 1402 may be further configured to send instructions to a disk group through the first interface, to modify data in the disk group. The transmitter 1402 may further include a display device, for example, a display.

In this embodiment of this application, in a case, the processor 1403 is configured to use trained models (for example, a trained first model and a trained second model) to perform corresponding data processing on input data to obtain corresponding output data (that is, a prediction result). The trained model may be obtained by using the training methods corresponding to FIG. 4 and FIG. 5 in this application. For specific content, refer to the descriptions in the foregoing method embodiments in this application. Details are not described herein again.

An embodiment of this application further provides a computer-readable storage medium. The computer-readable storage medium stores a program for signal processing. When the program is run on a computer, the computer is enabled to perform the steps performed by the training device described in the foregoing embodiments, or the computer is enabled to perform the steps performed by the execution device described in the embodiment shown in FIG. 8.

The training device or the execution device in embodiments of this application may specifically be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable the chip in the training device to perform the steps performed by the training devices described in the foregoing embodiments shown in FIG. 4 and FIG. 5, or to enable the chip in the execution device to perform the steps performed by the execution devices described in embodiments shown in FIG. 9 and FIG. 10.

Optionally, the storage unit is a storage unit in the chip, for example, a register or a cache; or the storage unit may be a storage unit that is in a radio access device and that is located outside the chip, for example, a read-only memory (read-only memory, ROM), another type of static storage device that can store static information and instructions, or a random access memory (random access memory, RAM).

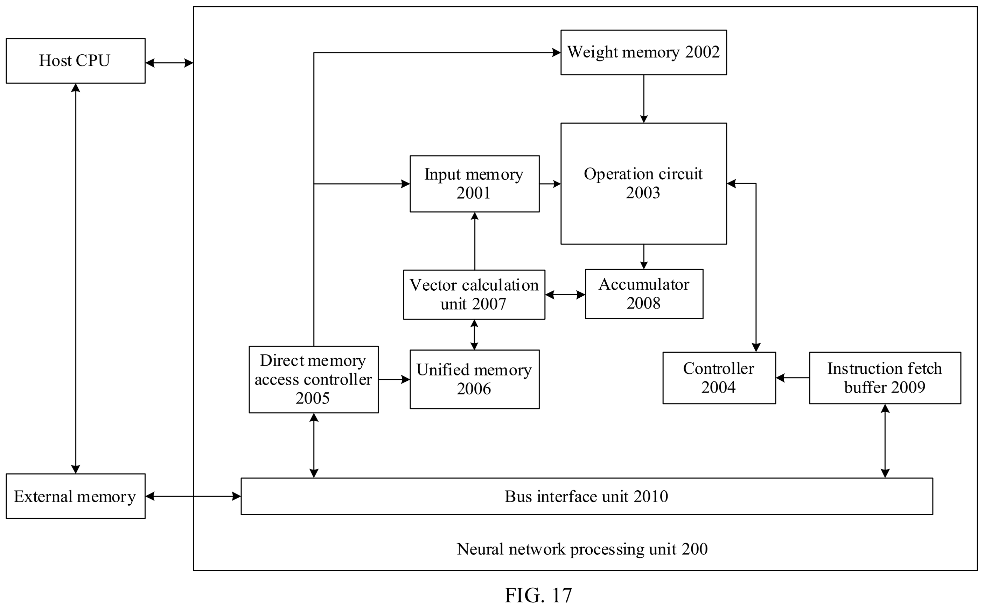

Specifically, FIG. 17 is a diagram of a structure of a chip according to an embodiment of this application. The chip may be embodied as a neural network processing unit NPU 200. The NPU 200 is mounted to a host CPU (host CPU) as a coprocessor, and the host CPU allocates a task. A core part of the NPU is an operation circuit 2003, and a controller 2004 controls the operation circuit 2003 to extract matrix data in a memory and perform a multiplication operation.

In some implementations, the operation circuit 2003 includes a plurality of process engines (process engine, PE) inside. In some implementations, the operation circuit 2003 is a twodimensional systolic array. The operation circuit 2003 may alternatively be a one-dimensional systolic array or another electronic circuit that can perform mathematical operations such as multiplication and addition. In some implementations, the operation circuit 2003 is a general-purpose matrix processor.

For example, it is assumed that there is an input matrix A, a weight matrix B, and an output matrix C. The operation circuit obtains data corresponding to the matrix B from a weight memory 2002, and buffers the data to each PE in the operation circuit. The operation circuit obtains data of the matrix A from an input memory 2001, and performs a matrix operation on the matrix B and the data of the matrix A. Partial results or final results of a matrix that are obtained are stored in an accumulator (accumulator) 2008.

A unified memory 2006 is configured to store input data and output data. Weight data is directly transferred to the weight memory 2002 by using a direct memory access controller (direct memory access controller, DMAC) 2005. Input data is also transferred to the unified memory 2006 through the DMAC.

A bus interface unit 2010 (bus interface unit, BIU for short) is configured to interact with the DMAC and an instruction fetch buffer (Instruction Fetch Buffer, IFB) 2009 through an AXI bus.

The bus interface unit 2010 is configured for the instruction fetch buffer 2009 to obtain instructions from an external memory, and is further configured for the direct memory access controller 2005 to obtain original data of the input matrix A or the weight matrix B from the external memory.

The DMAC is mainly configured to transfer input data in an external memory DDR to the unified memory 2006, transfer weight data to the weight memory 2002, or transfer input data to the input memory 2001.

A vector calculation unit 2007 includes a plurality of operation processing units, and if required, performs further processing, for example, vector multiplication, vector addition, an exponential operation, a logarithm operation, or a value comparison, on output of the operation circuit. The vector calculation unit 2007 is mainly configured to perform network calculation at a non-convolutional/fully connected layer in a neural network, for example, batch normalization (batch normalization), pixel-level summation, and upsampling on a feature plane.

In some implementations, the vector calculation unit 2007 can store a vector of processed output to the unified memory 2006. For example, the vector calculation unit 2007 may apply a linear function and/or a non-linear function to output of the operation circuit 2003, for example, perform linear interpolation on a feature plane extracted by a convolutional layer, or for another example, use a vector of an accumulated value to generate an activation value. In some implementations, the vector calculation unit 2007 generates a normalized value, a pixel-level sum, or a normalized value and a pixel-level sum. In some implementations, the vector of the processed output can be used as activation input to the operation circuit 2003, for example, for use at a subsequent layer of the neural network.

The instruction fetch buffer (instruction fetch buffer) 2009 connected to the controller 2004 is configured to store instructions to be used by the controller 2004.

The unified memory 2006, the input memory 2001, the weight memory 2002, and the instruction fetch buffer 2009 are all on-chip memories. The external memory is private to a hardware architecture of the NPU.

The processor mentioned anywhere above may be a general-purpose central processing unit, a microprocessor, an ASIC, or one or more integrated circuits that are configured to control program execution of the method according to the first aspect.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When the software is used to implement embodiments, all or a part of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

## Claims

1. A model training method, wherein the model comprises at least a first model and a second model, and the method comprises:

obtaining a dataset, wherein the dataset comprises historical power data and historical meteorological data in preset duration;

determining a first weight of a first sub-loss function and a second weight of a second sub-loss function based on the dataset, wherein the first sub-loss function is a loss function corresponding to the first model, the second sub-loss function is a loss function corresponding to the second model, the first model and the second model are used to represent input data, and data represented by the first model is not completely the same as data represented by the second model;

determining a target loss function based on the first sub-loss function, the second sub-loss function, the first weight, and the second weight; and

training the model based on the dataset and the target loss function, to obtain a trained model, wherein the trained model comprises at least a trained first model and a trained second model.

2. The method according to claim 1, wherein the first model is used to perform global representation on the historical power data and the historical meteorological data, and the second model is used to perform local representation on the historical meteorological data.

3. The method according to claim 1 or 2, wherein
the historical meteorological data comprises historical real meteorological data in a first time period, corresponding historical predicted meteorological data, and historical predicted meteorological data in a second time period, wherein the historical real meteorological data in the first time period and the corresponding historical predicted meteorological data are used to determine the first weight and the second weight, and the historical predicted meteorological data in the second time period is used to train the model.

4. The method according to claim 3, wherein the historical real meteorological data in the first time period and the corresponding historical predicted meteorological data comprise a first sub-dataset and a second sub-dataset, the first sub-dataset comprises first historical real meteorological data and first historical predicted meteorological data, the second sub-dataset comprises second historical real meteorological data and second historical predicted meteorological data, and determining the first weight of the first sub-loss function and the second weight of the second sub-loss function based on the dataset comprises:

determining first accuracy of the first historical predicted meteorological data based on the first sub-dataset;
determining second accuracy of the second historical predicted meteorological data based on the second sub-dataset;
determining the first weight of the first sub-loss function based on the first accuracy and the second accuracy; and
determining the second weight of the second sub-loss function based on the first weight.

5. The method according to claim 4, wherein
a value of the first weight is inversely correlated with a value of the second accuracy.

6. The method according to claim 4 or 5, wherein determining the first accuracy of the first historical predicted meteorological data based on the first sub-dataset comprises:

performing data slicing on data in the first sub-dataset to obtain M first slice segments;
calculating first target accuracy of first historical predicted meteorological data in each first slice segment based on first historical real meteorological data and the first historical predicted meteorological data in each first slice segment, to obtain M pieces of first target accuracy; and
determining the first accuracy based on the M pieces of first target accuracy, wherein the first accuracy comprises a maximum value, a minimum value, and/or a mean value of the M pieces of first target accuracy.

7. The method according to any one of claims 4 to 6, wherein determining the second accuracy of the second historical predicted meteorological data based on the second sub-dataset comprises:

performing data slicing on data in the second sub-dataset to obtain N second slice segments;
calculating second target accuracy of second historical predicted meteorological data in each second slice segment based on second historical real meteorological data and the second historical predicted meteorological data in each second slice segment, to obtain N pieces of second target accuracy; and
determining the second accuracy based on the N pieces of second target accuracy, wherein the second accuracy comprises a mean value of the N pieces of second target accuracy.

8. The method according to any one of claims 3 to 7, wherein

the first model comprises at least one of a first submodel and a second submodel;
input of the first submodel is the historical power data in the dataset, and is used to perform global representation on the historical power data; and
input of the second submodel is the historical predicted meteorological data in the dataset, and is used to perform global representation on the historical predicted meteorological data.

9. The method according to any one of claims 1 to 8, wherein the historical power data comprises power generation power or load power, the power generation power comprises power generated by a power generation device through power generation, and the load power is power of electric energy consumed by one or more devices.

10. The method according to any one of claims 1 to 9, wherein

the model further comprises a third model;
input of the third model is data in the dataset, and output of the third model is a first adaptive weight of the first model and a second adaptive weight of the second model; and
the third model is used to combine an output result of the first model and an output result of the second model based on the first adaptive weight and the second adaptive weight.

11. The method according to claim 10, wherein determining the target loss function based on the first sub-loss function, the second sub-loss function, the first weight, and the second weight comprises:
determining the target loss function based on a third sub-loss function, the first sub-loss function, the second sub-loss function, the first weight, and the second weight, wherein the third sub-loss function is a loss function corresponding to the third model.

12. The method according to claim 8, wherein the first submodel, the second submodel, and the second model comprise any one of the following:
a temporal convolutional network TCN, a recurrent neural network RNN, a long short-term memory LSTM network, and a multilayer perceptron MLP.

13. The method according to claim 10 or 11, wherein the third model comprises any one of the following:
a multilayer perceptron MLP and a neural network with a self-attention mechanism.

14. A power prediction method, comprising:

obtaining input data, wherein the input data comprises historical power data in first preset duration and predicted meteorological data in second preset duration; and
inputting the input data to a trained model, to obtain predicted power data at at least one preset moment in the second preset duration, wherein the trained model comprises at least a trained first model and a trained second model, the trained first model and the trained second model are used to represent the input data, data represented by the model is not completely the same as data represented by the second model, and representation output by the trained first model and representation output by the trained second model are used to obtain the predicted power data at the at least one preset moment in the second preset duration.

15. The method according to claim 14, wherein
the trained first model is used to perform global representation on the historical power data in the first preset duration or the predicted meteorological data in the second preset duration, the trained second model is used to perform local representation on the predicted meteorological data in the second preset duration, and the global representation and the local representation are used to obtain the predicted power data at the at least one preset moment in the second preset duration.

16. The method according to claim 14 or 15, wherein

the first model comprises at least a first submodel and a second submodel;
input of the first submodel is the historical power data, and is used to perform global representation on the historical power data; and
input of the second submodel is the predicted meteorological data, and is used to perform global representation on the predicted meteorological data.

17. The method according to any one of claims 14 to 16, wherein the predicted power data at the at least one preset moment in the second preset duration comprises power generation power or load power at the at least one preset moment in the second preset duration, the power generation power comprises power generated by a power generation device through power generation, and the load power is power of electric energy consumed by one or more devices.

18. The method according to any one of claims 14 to 16, wherein

the model further comprises a third model;
input of the third model is the input data, and output of the third model is a first adaptive weight of the first model and a second adaptive weight of the second model; and
the third model is used to combine an output result of the first model and an output result of the second model based on the first adaptive weight and the second adaptive weight.

19. The method according to claim 16, wherein the first submodel, the second submodel, and the second model comprise any one of the following:
a temporal convolutional network TCN, a recurrent neural network RNN, a long short-term memory LSTM network, and a multilayer perceptron MLP.

20. The method according to claim 18, wherein the third model comprises any one of the following:
a multilayer perceptron MLP and a neural network with a self-attention mechanism.

21. A training device, wherein a model is deployed on the training device, the model comprises at least a first model and a second model, and the training device comprises:

an obtaining module, configured to obtain a dataset, wherein the dataset comprises at least historical power data and historical meteorological data in preset duration;
a calculation module, configured to determine a first weight of a first sub-loss function and a second weight of a second sub-loss function based on the dataset, wherein the first sub-loss function is a loss function corresponding to the first model, the second sub-loss function is a loss function corresponding to the second model, the first model and the second model are used to represent input data, and data represented by the first model is not completely the same as data represented by the second model;
a determining module, configured to determine a target loss function based on the first sub-loss function, the second sub-loss function, the first weight, and the second weight; and
a training module, configured to train the model based on the dataset and the target loss function, to obtain a trained model, wherein the trained model comprises at least a trained first model and a trained second model.

22. The device according to claim 21, wherein the first model is used to perform global representation on the historical power data and the historical meteorological data, and the second model is used to perform local representation on the historical meteorological data.

23. The device according to claim 21 or 22, wherein the historical meteorological data comprises historical real meteorological data in a first time period, corresponding historical predicted meteorological data, and historical predicted meteorological data in a second time period, wherein the historical real meteorological data in the first time period and the corresponding historical predicted meteorological data are used to determine the first weight and the second weight, and the historical predicted meteorological data in the second time period is used to train the model.

24. The device according to claim 23, wherein the historical real meteorological data in the first time period and the corresponding historical predicted meteorological data comprise a first sub-dataset and a second sub-dataset, the first sub-dataset comprises first historical real meteorological data and first historical predicted meteorological data, the second sub-dataset comprises second historical real meteorological data and second historical predicted meteorological data, and the calculation module is specifically configured to:

determine first accuracy of the first historical predicted meteorological data based on the first sub-dataset;
determine second accuracy of the second historical predicted meteorological data based on the second sub-dataset;

determine the first weight of the first sub-loss function based on the first accuracy and the second accuracy; and determine the second weight of the second sub-loss function based on the first weight.

25. The device according to claim 24, wherein a value of the first weight is inversely correlated with a value of the second accuracy.

26. The device according to claim 24 or 25, wherein the calculation module is further specifically configured to:

perform data slicing on data in the first sub-dataset to obtain M first slice segments;
calculate first target accuracy of first historical predicted meteorological data in each first slice segment based on first historical real meteorological data and the first historical predicted meteorological data in each first slice segment, to obtain M pieces of first target accuracy; and
determine the first accuracy based on the M pieces of first target accuracy, wherein the first accuracy comprises a maximum value, a minimum value, and/or a mean value of the M pieces of first target accuracy.

27. The device according to any one of claims 24 to 26, wherein the calculation module is further specifically configured to:

perform data slicing on data in the second sub-dataset to obtain N second slice segments;
calculate second target accuracy of second historical predicted meteorological data in each second slice segment based on second historical real meteorological data and the second historical predicted meteorological data in each second slice segment, to obtain N pieces of second target accuracy; and
determine the second accuracy based on the N pieces of second target accuracy, wherein the second accuracy comprises a mean value of the N pieces of second target accuracy.

28. The device according to any one of claims 21 to 27, wherein the first model comprises at least one of a first submodel and a second submodel;

input of the first submodel is the historical power data in the dataset, and is used to perform global representation on the historical power data; and
input of the second submodel is the historical predicted meteorological data in the dataset, and is used to perform global representation on the historical predicted meteorological data.

29. The device according to any one of claims 21 to 28, wherein the historical power data comprises power generation power or load power, the power generation power comprises power generated by a power generation device through power generation, and the load power comprises power of electric energy consumed by one or more devices.

30. The device according to any one of claims 21 to 29, the model further comprises a third model;

input of the third model is data in the dataset, and output of the third model is a first adaptive weight of the first model and a second adaptive weight of the second model; and
the third model is used to combine an output result of the first model and an output result of the second model based on the first adaptive weight and the second adaptive weight.

31. The device according to claim 30, wherein the determining module is specifically configured to:
determine the target loss function based on a third sub-loss function, the first sub-loss function, the second sub-loss function, the first weight, and the second weight, wherein the third sub-loss function is a loss function corresponding to the third model.

32. The device according to claim 29, wherein the first submodel, the second submodel, and the second model comprise any one of the following:
a temporal convolutional network TCN, a recurrent neural network RNN, a long short-term memory LSTM network, and a multilayer perceptron MLP.

33. The device according to any one of claims 30 to 32, wherein the third model comprises any one of the following:
a multilayer perceptron MLP and a neural network with a self-attention mechanism.

34. An execution device, wherein a trained model is deployed on the execution device, the model comprises at least a first model and a second model, and the execution device comprises:

an obtaining module, configured to obtain input data, wherein the input data comprises historical power data in first preset duration and predicted meteorological data in second preset duration; and

a prediction module, configured to input the input data to the trained model, to obtain predicted power data at at least one preset moment in the second preset duration, wherein the trained model comprises at least a trained first model and a trained second model, the trained first model and the trained second model are used to represent the input data, data represented by the model is not completely the same as data represented by the second model, and representation output by the trained first model and representation output by the trained second model are used to obtain the predicted power data at the at least one preset moment in the second preset duration.

35. The device according to claim 34, wherein
the trained first model is used to perform global representation on the historical power data in the first preset duration or the predicted meteorological data in the second preset duration, the trained second model is used to perform local representation on the predicted meteorological data in the second preset duration, and the global representation and the local representation are used to obtain the predicted power data at the at least one preset moment in the second preset duration.

36. The device according to claim 34 or 35, wherein the first model comprises at least a first submodel and a second submodel;

input of the first submodel is the historical power data, and is used to perform global representation on the historical power data; and
input of the second submodel is the predicted meteorological data, and is used to perform global representation on the predicted meteorological data.

37. The device according to any one of claims 34 to 36, wherein the predicted power data at the at least one preset moment in the second preset duration comprises power generation power or load power at the at least one preset moment in the second preset duration, the power generation power comprises power generated by a power generation device through power generation, and the load power is power of electric energy consumed by one or more devices.

38. The device according to any one of claims 34 to 37, the model further comprises a third model;

input of the third model is the input data, and output of the third model is a first adaptive weight of the first model and a second adaptive weight of the second model; and
the third model is used to combine an output result of the first model and an output result of the second model based on the first adaptive weight and the second adaptive weight.

39. The device according to claim 36, wherein the first submodel, the second submodel, and the second model comprise any one of the following:
a temporal convolutional network TCN, a recurrent neural network RNN, a long short-term memory LSTM network, and a multilayer perceptron MLP.

40. The device according to claim 38, wherein the third model comprises any one of the following:
a multilayer perceptron MLP and a neural network with a self-attention mechanism.

41. A training device, comprising a processor and a memory, wherein the processor is coupled to the memory;

the memory is configured to store a program; and
the processor is configured to execute the program in the memory, to enable the training device to perform the method according to any one of claims 1 to 13.

42. An execution device, comprising a processor and a memory, wherein the processor is coupled to the memory;

the memory is configured to store a program; and
the processor is configured to execute the program in the memory, to enable the execution device to perform the method according to any one of claims 14 to 20.

43. A computer-readable storage medium, comprising a program, wherein when the program is run on a computer, the computer is enabled to perform the method according to any one of claims 1 to 20.

**44.** A computer program product comprising instructions, wherein when the computer program product runs on a computer, the computer is enabled to perform the method according to any one of claims 1 to 20.

**45.** A chip, wherein the chip comprises a processor and a data interface, and the processor reads, through the data interface, instructions stored in a memory to perform the method according to any one of claims 1 to 20.

Intelligent information chain

Intelligent product and industry application

Translation/Text analysis/...    Speech/Visual/Image/...

Data

Data processing    Data training/Machine learning/Deep learning    Searching/Inference/Decision-making    ...

Infrastructure    Sensor    Intelligent chip    Base platform    ...

IT value chain

EP 4 679 327 A1

FIG. 1

**Photovoltaic power generation power prediction system 200**

Weather server 202

Network

Weather forecast platform 201

Optical power prediction server 203

Visual workbench 205

Data storage server 204

Dispatching system 206

FIG. 2

FIG. 3

```
┌─────────────────────────────────────────────────────────────┐ ── 501
│                                                               │
│                      Obtain a dataset                         │
│                                                               │
└─────────────────────────────────────────────────────────────┘
                              │
                              ▼
┌─────────────────────────────────────────────────────────────┐ ── 502
│  Determine, based on the dataset, a first weight of a first   │
│  sub-loss function corresponding to a first model and a       │
│  second weight of a second sub-loss function corresponding    │
│  to a second model                                            │
└─────────────────────────────────────────────────────────────┘
                              │
                              ▼
┌─────────────────────────────────────────────────────────────┐ ── 503
│  Determine a final target loss function based on the first    │
│  sub-loss function, the second sub-loss function, the first   │
│  weight, and the second weight                                │
└─────────────────────────────────────────────────────────────┘
                              │
                              ▼
┌─────────────────────────────────────────────────────────────┐ ── 504
│  Train the models based on training data and validation data  │
│  in the dataset and the target loss function, to obtain a     │
│  trained high-precision prediction model                      │
└─────────────────────────────────────────────────────────────┘
```

FIG. 4

Obtain a dataset, where the dataset includes at least historical photovoltaic power generation power data in preset duration, historical real meteorological data, and historical predicted meteorological data corresponding to the historical real meteorological data ⌐ 401

Determine a first weight of a first sub-loss function and a second weight of a second sub-loss function based on the dataset, where the first sub-loss function is a loss function corresponding to a first model, the second sub-loss function is a loss function corresponding to a second model, the first model is used to perform global representation on at least the historical photovoltaic power generation power data and the historical predicted meteorological data, and the second model is used to perform local representation on the historical predicted meteorological data ⌐ 402

Determine a target loss function based on the first sub-loss function, the second sub-loss function, the first weight, and the second weight ⌐ 403

Train the models based on the dataset and the target loss function, to obtain a trained model, where the trained model includes at least a trained first model and a trained second model ⌐ 404

FIG. 5

FIG. 6

FIG. 7

**Input**

$PV_{his}$

**NWP**

**Third model**

**First model**

**First submodel**
Global *PV* representation

**Second submodel**
Global *NWP* representation

**Second model**
Local *NWP* representation

**Output₀**

**Output₁**

Adaptive weight β

Adaptive weight α

**Output**

FIG. 8

Obtain input data — 901

Input the input data to a model trained in a training phase, to obtain predicted power data in second preset duration — 902

FIG. 9

Obtain input data, where the input data includes historical photovoltaic power generation power data in first preset duration and historical predicted meteorological data ⎯ 801

Input the input data to a trained model, to obtain predicted photovoltaic power generation power data at at least one preset moment in second preset duration ⎯ 802

FIG. 10

Historical data
(photovoltaic power generation power data and meteorological data)

Training data

Validation data

Multi-modal loss weight calculation

Multi-modal and multi-scale information combination

Model for accurate prediction that is obtained through training

Online input
(historical photovoltaic power generation power data and historical predicted meteorological data)

Prediction result

FIG. 11

| Method/(Accuracy) | Average ACC |
|:---:|:---:|
| Baseline | 87.18% |
| LightGBM | 86.61% |
| FEDformer | 82.88% |
| **Ours** | ***93.24%*** |

FIG. 12

Training device 1100

1101   1102   1103   1104

| Obtaining module | Calculation module | Determining module | Training module |

FIG. 13

Execution device 1200

1201   1202

| Obtaining module | Prediction module |

FIG. 14

FIG. 15

1400

Execution device

Antenna

Antenna

| Receiver 1401 | Transmitter 1402 |

Processor 1403

| Memory 1404 | Application processor 14031 | Communication processor 14032 |

FIG. 16

| | |
|---|---|
| Host CPU | |

Weight memory 2002

Input memory 2001

Operation circuit 2003

Vector calculation unit 2007

Accumulator 2008

Direct memory access controller 2005

Unified memory 2006

Controller 2004

Instruction fetch buffer 2009

External memory

Bus interface unit 2010

Neural network processing unit 200

FIG. 17

**INTERNATIONAL SEARCH RE**

| | International application No. |
|---|---|
| | **PCT/CN2024/077717** |

| **A.** | **CLASSIFICATION OF SUBJECT MATTER** |
|---|---|

G06N 3/08(2023.01)i

According to International Patent Classification (IPC) or to both national classification and IPC

| **B.** | **FIELDS SEARCHED** |
|---|---|

Minimum documentation searched (classification system followed by classification symbols)

IPC: G06N G06F

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 损失函数, 权重, 模型, 训练, 气象, loss function, weight, model, training, weather

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 117131974 A (HUAWEI TECHNOLOGIES CO., LTD.) 28 November 2023 (2023-11-28) claims 1-45 | 1-45 |
| PX | CN 116502692 A (HUAWEI TECHNOLOGIES CO., LTD.) 28 July 2023 (2023-07-28) claims 1-38, and description, paragraphs [0007]-[0043] | 1-45 |
| X | CN 107908635 A (BAIDU ONLINE NETWORK TECHNOLOGY (BEIJING) CO., LTD.) 13 April 2018 (2018-04-13) description, paragraphs [0033]-[0102], and figures 1-4 | 1-3, 8-9, 12, 14-17, 19, 21-23, 28-29, 32-37, 39, 41-45 |
| A | JP 2023009811 A (HITACHI TRANSPORT SYSTEM, LTD.) 20 January 2023 (2023-01-20) entire document | 1-45 |
| A | CN 113919232 A (BEIJING AEROSPACE CHUANGZHI TECHNOLOGY CO., LTD.) 11 January 2022 (2022-01-11) entire document | 1-45 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 April 2024** | **13 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH RE**
**Information on patent family mem**

International application No.

**PCT/CN2024/077717**

| Patent document<br>cited in search report | | | Publication date<br>(day/month/year) | Patent family member(s) | | | Publication date<br>(day/month/year) |
|---|---|---|---|---|---|---|---|
| CN | 117131974 | A | 28 November 2023 | None | | | |
| CN | 116502692 | A | 28 July 2023 | None | | | |
| CN | 107908635 | A | 13 April 2018 | US | 2019095432 | A1 | 28 March 2019 |
| | | | | US | 10783331 | B2 | 22 September 2020 |
| | | | | CN | 107908635 | B | 16 April 2021 |
| JP | 2023009811 | A | 20 January 2023 | None | | | |
| CN | 113919232 | A | 11 January 2022 | None | | | |

Form PCT/ISA/210 (patent family annex) (July 2022)

**EP 4 679 327 A1**

**Patent documents cited in the description**

- CN 202310335408

- CN 202310891669